# EUROPEAN PATENT SPECIFICATION

(11) **EP 3 197 015 B1**
(45) Date of publication and mention of the grant of the patent: **27.02.2019**
(21) Application number: 15841575.2
(22) Date of filing: 18.09.2015
(51) Int. Cl.: H02J 7/02, H02J 50/60, H02J 50/40, H02J 50/80, H02J 50/12, H02J 50/00, H02J 7/00, H01F 38/14

(54) **NON-CONTACT POWER TRANSMISSION SYSTEM**
KONTAKTLOSES KRAFTÜBERTRAGUNGSSYSTEM
SYSTÈME DE TRANSMISSION D'ÉNERGIE SANS CONTACT

(30) Priority: 19.09.2014 JP 2014191312
(43) Date of publication of application: 26.07.2017
(73) Proprietor: Panasonic Intellectual Property Management Co., Ltd., Osaka-shi, Osaka 540-6207 (JP)
(72) Inventor: KITAMURA, Hiroyasu, Osaka 540-6207 (JP); TSUTSUI, Mami, Osaka 540-6207 (JP)
(74) Representative: Grünecker Patent- und Rechtsanwälte PartG mbB
(86) International application number: PCT/JP2015/004793
(87) International publication number: WO 2016/042777

(56) References cited:
- JP-A- 2010 124 522
- JP-A- 2011 229 265
- JP-A- 2012 034 487
- US-A1- 2010 123 430
- US-A1- 2012 326 524

## Description

### TECHNICAL FIELD

The present disclosure relates to a non-contact power transmission system that transmits power in a non-contact manner.

### BACKGROUND ART

In recent years, there has been known a non-contact power transmission system that includes both a power transmission device including a power transmission coil for transmitting power, and a power reception device including a power reception coil for receiving the transmitted power. In such a non-contact power transmission system, magnetic fluxes generated in the power transmission coil are interlinked with the power reception coil, and power is transmitted from the power transmission coil to the power reception coil in a non-contact manner, by electromagnetic induction.

Patent Literature (PTL1) discloses a non-contact power transmission system in which information such as a power supply request is transmitted from a power reception device to a power transmission device by load modulation. PTL2 discloses a non-contact power transmission system in which a power transmission device can transmit power to a plurality of power reception devices.

### Citation List

### Patent Literatures

PTL1: Unexamined Japanese Patent Publication No. 2008-206305
PTL2: Unexamined Japanese Patent Publication No. H07-298505

### SUMMARY OF THE INVENTION

When the technique described in PTL1 is applied to the non-contact power transmission system that includes a plurality of power reception devices described in PTL2, a case occurs where information items are transmitted simultaneously from the plurality of power reception devices to the power transmission device. In this case, there is a possibility that the power transmission device cannot correctly receive the information items due to crosstalk and the like.

Thus, when a communication method based on short-range radio communication standards of a 2.4 GHz band for Bluetooth (registered trademark), ZigBee (registered trademark), and the like is used, the power transmission device can correctly receive the information items such as the power supply requests simultaneously transmitted from the plurality of power reception devices.

However, using the communication method based on the short-range radio communication standards as described above leads to the complication of a device configuration and increases in the size and cost.

In order to solve the above problems, an object of the present disclosure is to provide a non-contact power transmission system in which a power transmission device can correctly determine a power supply request from a power reception device in a simple configuration.

An example of wireless power transfer start-up sequence is shown in US 2010123430 A1. This prior art is reflected by the preamble of claim 1.

In order to achieve the above object there is provided a non-contact power transmission system according to claim 1. Embodiments of the invention are defined in the dependent claims. An aspect of the present disclosure provides a non-contact power transmission system including a power transmission device and a power reception device and performing power transmission in a non-contact manner.

The power transmission device includes a power transmission coil, an oscillator that makes the power transmission coil oscillate, an oscillation controller that controls the oscillator so that the power transmission coil performs continuous oscillation, or intermittent oscillation in a predetermined cycle, and a current detector that outputs a detection value according to an input current flowing in the power transmission coil.

The power reception device includes a power reception coil, a switch unit that sets the power reception coil to a conductive state or a non-conductive state, and a switch controller that causes the switch unit to switch between the conductive state and the non-conductive state synchronously with the predetermined cycle, in the case of the intermittent oscillation.

The switch controller executes a switching operation of keeping the power reception coil in the conductive state during one oscillation period of the power transmission coil, and keeping the power reception coil in the non-conductive state during subsequent N (N is a predetermined natural number) oscillation periods of the power transmission coil.

The oscillation controller causes the oscillator to switch the power transmission coil from the intermittent oscillation to the continuous oscillation when the detection value is equal to or above a predetermined threshold value during the one oscillation period of the power transmission coil and also the detection value is less than the threshold value during at least one of the subsequent N oscillation periods of the power transmission coil.

According to the present aspect, in a simple configuration of only controlling the switch unit of the power reception device, power can be suitably transmitted by switching the power transmission coil from the intermittent oscillation to the continuous oscillation. When a metal foreign substance exists near the power transmission coil, heating of the metal foreign substance can be prevented by continuing the intermittent oscillation.

### BRIEF DESCRIPTION OF DRAWINGS

FIG. 1 schematically illustrates a circuit of a non-contact power transmission system according to a first exemplary embodiment.
FIG. 2 schematically illustrates a configuration of the non-contact power transmission system according to the first exemplary embodiment.
FIG. 3A is a plan view of a power transmission coil.
FIG. 3B is a sectional view of the power transmission coil.
FIG. 4 is a sectional view of a power reception coil.
FIG. 5 is a sectional view schematically illustrating a state where an electric device is placed on the power transmission device.
FIG. 6 is a timing chart illustrating operation of a charger.
FIG. 7 is a timing chart illustrating the switching of switching elements and a charging current according to the first exemplary embodiment.
FIG. 8 is a timing chart schematically illustrating a voltage waveform and a current waveform in continuous oscillation and intermittent oscillation.
FIG. 9 is a timing chart schematically illustrating a voltage waveform and a current waveform in the charger during the intermittent oscillation.
FIG. 10 is a timing chart schematically illustrating a voltage waveform and a current waveform in the charger during the intermittent oscillation, and operation of the switching elements in the electric device during the intermittent oscillation, according to the first exemplary embodiment.
FIG. 11 illustrates, in a table, operation patterns of two electric devices.
FIG. 12 is a flowchart schematically illustrating an operation procedure of a controller of the charger according to the first exemplary embodiment.
FIG. 13 is a flowchart schematically illustrating an operation procedure, different from the operation procedure in FIG. 12, of the controller of the charger according to the first exemplary embodiment.
FIG. 14 schematically illustrates a circuit of a non-contact power transmission system of a magnetic resonance system.
FIG. 15 schematically illustrates a circuit of a non-contact power transmission system according to a second exemplary embodiment.
FIG. 16A is a plan view of a power transmission coil according to the second exemplary embodiment.
FIG. 16B is a sectional view of the power transmission coil according to the second exemplary embodiment.
FIG. 17 is a sectional view schematically illustrating a state where the electric device is inserted in the charger.
FIG. 18 is a timing chart illustrating the operation of the switching element and a charging current according to the second exemplary embodiment.
FIG. 19 is a timing chart schematically illustrating a voltage waveform and a current waveform in the charger during the intermittent oscillation, and operation of the switching element in the electric device during the intermittent oscillation, according to the second exemplary embodiment.
FIG. 20 schematically illustrates a circuit of a non-contact power transmission system of a magnetic resonance system according to the second exemplary embodiment.
FIG. 21 is a sectional view of a power reception coil and a converging magnetic flux coil of the magnetic resonance system.
FIG. 22A is a sectional view, different from FIG, 21, of a power reception coil and a converging magnetic flux coil of the magnetic resonance system.
FIG. 22B is a sectional view schematically illustrating a state where the electric device including the power reception coil and the converging magnetic flux coil in FIG. 22A is inserted in the charger.

### DESCRIPTION OF EMBODIMENTS

An embodiment of the present disclosure provides a non-contact power transmission system including a power transmission device and a power reception device and performing power transmission in a non-contact manner.

The power transmission device includes a power transmission coil, an oscillator that makes the power transmission coil oscillate, an oscillation controller that controls the oscillator so that the power transmission coil performs continuous oscillation, or intermittent oscillation in a predetermined cycle, and a current detector that outputs a detection value according to an input current flowing in the power transmission coil.

The power reception device includes a power reception coil, a switch unit that sets the power reception coil to a conductive state or a non-conductive state, and a switch controller that causes the switch unit to switch between the conductive state and the non-conductive state synchronously with the predetermined cycle, in the case of the intermittent oscillation.

The switch controller executes a switching operation of keeping the power reception coil in the conductive state during one oscillation period of the power transmission coil, and keeping the power reception coil in the non-conductive state during subsequent N (N is a predetermined natural number) oscillation periods of the power transmission coil.

The oscillation controller causes the oscillator to switch the power transmission coil from the intermittent oscillation to the continuous oscillation when the detection value is equal to or above a predetermined threshold value during the one oscillation period of the power transmission coil and also the detection value is less than the threshold value during at least one of the subsequent N oscillation periods of the power transmission coil.

According to the present aspect, when the power reception coil is in the conductive state, during one oscillation period of the power transmission coil, magnetic fluxes generated in the power transmission coil are interlinked with the power reception coil, and alternating-current power is generated in the power reception coil. Therefore, a value of the input current of the power transmission coil becomes equal to or above a predetermined threshold value, and the value of the input current is determined to be equal to or above the threshold value.

When the power reception coil is in the non-conductive state, alternating-current power is not generated in the power reception coil even when magnetic fluxes generated in the power transmission coil are interlinked with the power reception coil, and the value of the input current of the power transmission coil decreases to less than the threshold value.

As a result, the detection value is determined to be less than the threshold value during at least one of the subsequent N oscillation periods of the power transmission coil. According to the determination, power is transmitted by switching the power transmission coil from the intermittent oscillation to the continuous oscillation.

When a metal foreign substance exists near the power transmission coil, magnetic fluxes generated in the power transmission coil are interlinked with the metal foreign substance, and alternating-current power is generated. Therefore, even when the power reception coil is in the non-conductive state, the value of the input current of the power transmission coil does not decrease to less than the threshold value, and the intermittent oscillation is continued.

According to the present aspect, in a simple configuration of only controlling the switch unit of the power reception device, the current flowing in the power reception coil is controlled, and power can be suitably transmitted by switching the power transmission coil from the intermittent oscillation to the continuous oscillation. When a metal foreign substance exists near the power transmission coil, heating of the metal foreign substance can be prevented by continuing the intermittent oscillation.

In the above aspect, the switch unit may include a parallel switching element connected in parallel to the power reception coil, and the switch controller may keep the parallel switching element in the off state during one oscillation period of the power transmission coil and keep the parallel switching element in the on state during subsequent N (N is a predetermined natural number) oscillation periods of the power transmission coil.

According to the present aspect, in a similar manner to that of the above aspect, in a simple configuration, power can be suitably transmitted by switching the power transmission coil from the intermittent oscillation to the continuous oscillation, and heating of the metal foreign substance can be prevented.

In the above aspect, the switch unit may include a series switching element connected in series between the power reception coil and a load, and the switch controller may keep the series switching element in the on state during one oscillation period of the power transmission coil and keep the series switching element in the off state during subsequent N (N is a predetermined natural number) oscillation periods of the power transmission coil.

According to the present aspect, in a similar manner to that of the above aspect, in a simple configuration, power can be suitably transmitted by switching the power transmission coil from the intermittent oscillation to the continuous oscillation, and heating of the metal foreign substance can be prevented.

In the above aspect, N is a predetermined natural number equal to or above 2, and the non-contact power transmission system may further include (N-1) other power reception devices including a second power reception device of a same configuration as that of the power reception device.

For example, when N is 2, the non-contact power transmission system includes one other power reception device of the same configuration as that of the power reception device.

In the present aspect, it is assumed that the oscillation periods of the power transmission coils, during which power reception coils become in the conductive state and the non-conductive state, may coincide with each other or deviate from each other between the power reception device and the other power reception device. Even when the oscillation periods of the power transmission coils are deviated from each other, both power reception coils of the power reception device and the other power reception device become in the non-conductive state, during at least one of the subsequent two oscillation periods of the power transmission coils.

When N is 3 or above, in a similar manner, in the power reception device and the (N-1) other power reception devices, the switch controller executes a switching operation of keeping the power reception coils in the conductive state during one oscillation period of the power transmission coils and keeping the power reception coils in the non-conductive state during the subsequent N oscillation periods of the power transmission coils.

Even when the oscillation periods of the power transmission coils during which the power reception device and the (N-1) other power reception devices become in the conductive state and the non-conductive state are deviated from each other, the switch controller keeps in the non-conductive state all the power reception coils of the power reception device and the (N-1) other power reception devices, during at least one of the subsequent N oscillation periods of the power transmission coils.

When all the power reception coils of the power reception device and the (N-1) other power reception devices become in the non-conductive state, alternating-current power is not easily generated in the power reception coils even when magnetic fluxes generated in the power transmission coil are interlinked with the power reception coils.

Therefore, when a metal foreign substance does not exist near the power transmission coil, the detection value decreases to less than the threshold value. As a result, the power transmission coil is switched from the intermittent oscillation to the continuous oscillation, and power is transmitted from the power transmission coil to the power reception coil.

According to the present aspect, even when the non-contact power transmission system includes the power reception device and the (N-1) other power reception devices of the same configuration as that of the power reception device, only when a metal foreign substance does not exist near the power transmission coil, the power transmission coil is switched from the intermittent oscillation to the continuous oscillation and power can be suitably transmitted from the power transmission coil to the power reception coil.

In the present specification, "current does not flow substantially in the power reception coil" includes a case where weak current flows in the power reception coil, in addition to a case where current does not flow at all. That is, "current does not flow substantially in the power reception coil" means that "current does not flow at all in the power reception coil, or a value of current flowing in the power reception coil is equal to or less than a predetermined value (for example, 1/10 of a current value in the conductive state)".

In the above aspect, the oscillation controller may determine whether the detection value during only the oscillation period in the intermittent oscillation is equal to or above or less than the threshold value.

A detection value during a whole period of the intermittent oscillation becomes an average value of a detection value during the oscillation period and a detection value during a pause period, and therefore, becomes smaller than the detection value during only the oscillation period. As a result, when the detection value during the whole period of the intermittent oscillation is used, there is a possibility that determination accuracy becomes low. According to the present aspect, whether the detection value is equal to or above or less than the threshold value can be determined with high accuracy.

In the above aspect, the oscillation controller may determine whether to switch the power transmission coil from the intermittent oscillation to the continuous oscillation, by when a total time of N times of the predetermined cycle of the intermittent oscillation and the oscillation period of the power transmission coil passes, after the detection value during the oscillation period of the power transmission coil becomes equal to or above the threshold value.

When a metal foreign substance exists near the power transmission coil, the detection value is determined to be equal to or above the threshold value also when the power reception coil is in the non-conductive state during the subsequent N oscillation periods of the power transmission coil. That is, also during an N-th oscillation period of the power transmission coil, the detection value is determined to be equal to or above the threshold value.

In the case where a metal foreign substance does not exist near the power transmission coil, when the power transmission coil is in the non-conductive state during the subsequent N oscillation periods of the power transmission coil, the detection value is determined to be less than the threshold value during the N-th oscillation period of the power transmission coil at the latest.

According to the present aspect, regardless of existence of a metal foreign substance near the power transmission coil, whether to switch the power transmission coil from the intermittent oscillation to the continuous oscillation can be determined, by when a total time of N times of the predetermined cycle of the intermittent oscillation and the oscillation period of the intermittent oscillation passes.

In the above aspect, when the power transmission becomes unnecessary in the continuous oscillation, the switch controller may control the switch unit to set the power transmission coil to the non-conductive state. After switching the power transmission coil to the continuous oscillation, when the detection value is less than the threshold value, the oscillation controller may switch the power transmission coil to the intermittent oscillation. According to the present aspect, the standby power in the unnecessary state of the power transmission can be reduced.

In the above aspect, the oscillation controller causes the oscillator to switch the power transmission coil to the intermittent oscillation after a fixed time period after the power transmission coil is switched from the intermittent oscillation to the continuous oscillation. The switch controller executes the switching operation, after the power transmission coil is switched to the intermittent oscillation.

The oscillation controller, after switching the power transmission coil to the intermittent oscillation, causes the oscillator to switch the power transmission coil from the intermittent oscillation to the continuous oscillation, when the value of the input current is equal to or above the predetermined threshold value during the one oscillation period of the power transmission coil and also the value of the input current is less than the threshold value during at least one of the subsequent N oscillation periods of the power transmission coil.

According to the present aspect, even when a metal foreign substance is placed near the power transmission coil after the power transmission coil is switched from the intermittent oscillation to the continuous oscillation, heating of the metal foreign substance can be prevented.

Hereinafter, exemplary embodiments of the present disclosure will be described with reference to the drawings. The following exemplary embodiments are examples embodying the present disclosure, and will not limit a technical range of the present disclosure. Further, in each drawing, the same reference marks are used to designate the same configuration elements.

### FIRST EXEMPLARY EMBODIMENT

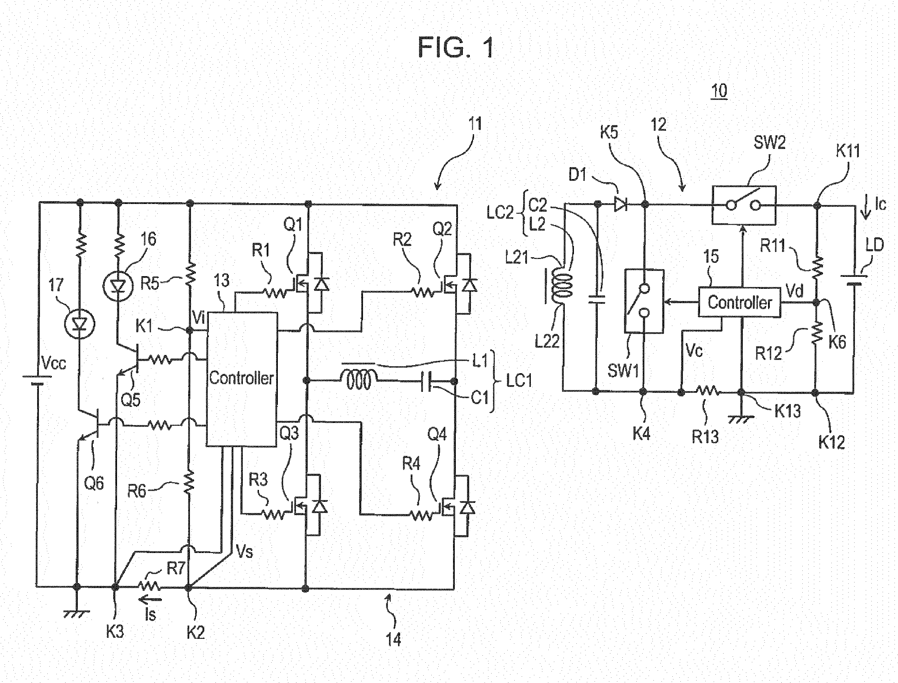

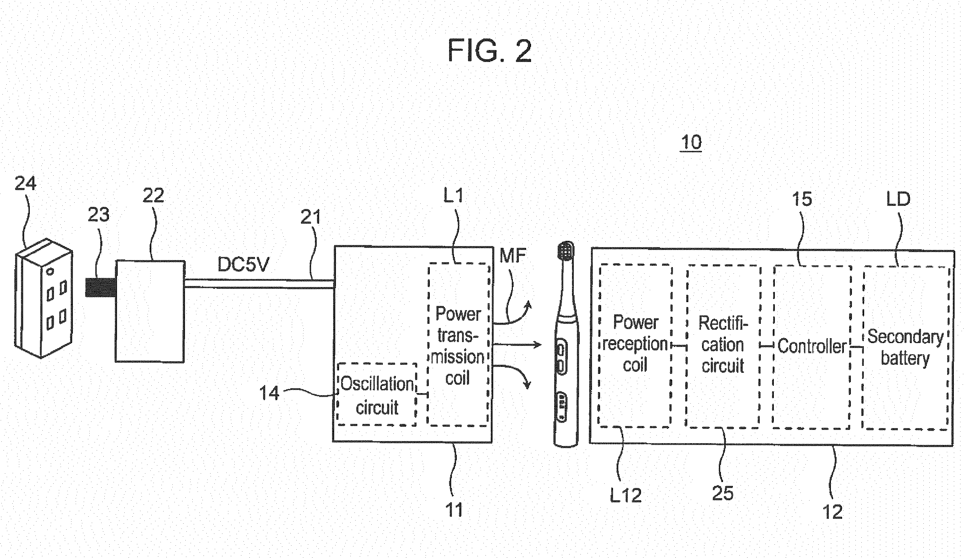

FIG. 1 schematically illustrates a circuit of non-contact power transmission system 10 according to a first exemplary embodiment. FIG. 2 schematically illustrates a configuration of non-contact power transmission system 10 according to the first exemplary embodiment. As illustrated in FIG. 1 and FIG. 2, non-contact power transmission system 10 according to the first exemplary embodiment includes charger 11 (an example of the power transmission device), and electric device 12 (an example of the power reception device).

To charger 11, adaptor 22 is connected via wiring cord 21. Adaptor 22 includes a rectification circuit, and a known power source circuit such as a DC-DC converter. When plug 23 of adaptor 22 is inserted to outlet 24 of a commercial alternating-current power source AC 100 V, adaptor 22 constitutes direct-current power source Vcc (see FIG. 1).

Charger 11 includes direct-current power source Vcc, switching elements Q1 to Q4, power transmission coil L1, capacitor C1, controller 13, resistors R1 to R4, resistors R5 to R7, light emitting diodes (LED) 16, 17, and transistors Q5, Q6.

In the present exemplary embodiment, direct-current power source Vcc outputs DC 5 V, for example. A negative-side terminal of direct-current power source Vcc is grounded.

In the present exemplary embodiment, switching elements Q1 to Q4 are N-channel metal-oxide semiconductor field-effect transistors (MOSFETs). Gates of switching elements Q1 to Q4 are connected to controller 13 via resistors R1 to R4, respectively. Switching elements Q1 to Q4 constitute oscillation circuit 14 (an example of the oscillator).

Power transmission coil L1 is for transmitting power to electric device 12. Capacitor C1 is connected in series to power transmission coil L1. Power transmission coil L1 and capacitor C1 constitute power transmission resonance circuit LC1. Power transmission resonance circuit LC1 is connected in series between switching element Q1 and switching element Q4, and is also connected in series between switching element Q2 and switching element Q3.

A series circuit including resistors R5, R6 is connected in parallel to direct-current power source Vcc. Controller 13 is connected to connection point K1 between resistor R5 and resistor R6, and voltage Vi divided by resistors R5, R6 is supplied to controller 13.

Resistor R7 is a current detection resistor (an example of the current detector) connected between sources of switching elements Q3, Q4 and an ground-side terminal of direct-current power source Vcc. That is, one end of resistor R7 is connected to connection point K2 on source sides of switching elements Q3, Q4, and the other end of resistor R7 is connected to connection point K3 on the ground side of direct-current power source Vcc. The one end (connection point K2) and the other end (connection point K3) of resistor R7 are connected to controller 13.

A series circuit including LED 16 and transistor Q5 is connected in parallel to direct-current power source Vcc. That is, an anode of LED 16 is connected to a positive-side terminal of direct-current power source Vcc via a resistor, and a cathode of LED 16 is connected to a collector of transistor Q5. The emitter of transistor Q5 is connected to the ground-side terminal of direct-current power source Vcc. A base of transistor Q5 is connected to controller 13 via a base resistor.

A series circuit including LED 17 and transistor Q6 is connected in entirely a similar manner to that of the series circuit including LED 16 and transistor Q5. A base of transistor Q6 is connected to controller 13 via a base resistor. LED 16 is a green LED, for example, and LED 17 is a red LED, for example.

Controller 13 (an example of the oscillation controller) includes a microcomputer, for example. Controller 13 controls the switching of switching elements Q1 to Q4. Controller 13 alternately repeats the operation of turning off switching elements Q2, Q3 that is simultaneous with the operation of turning on switching elements Q1, Q4, and the operation of turning on switching elements Q2, Q3 that is simultaneous with the operation of turning off switching elements Q1, Q4.

Controller 13 makes switching elements Q1 to Q4 perform switching at drive frequency Fc of 143 kHz, for example. Accordingly, alternating-current power is supplied to power transmission resonance circuit LC1, and magnetic fluxes of an alternating field are generated in power transmission coil L1.

When determining that there is a power supply request from electric device 12, controller 13 makes power transmission coil L1 perform the continuous oscillation. Controller 13 makes power transmission coil L1 perform intermittent oscillation, in a standby state where there is no power supply request from electric device 12. With this configuration, standby power of charger 11 is reduced. The continuous oscillation and the intermittent oscillation will be described in detail later.

Controller 13 detects the input voltage of oscillation circuit 14, based on voltage Vi divided by resistors R5, R6. Controller 13 determines abnormality of the input voltage, based on the detected input voltage. When the detected input voltage is lower than a predetermined voltage value, for example, controller 13 determines that the input voltage is abnormal.

Controller 13 detects input current Is that flows in power transmission coil L1, based on the voltage Vs of the one end (connection point K2) of resistor R7. Controller 13 determines the abnormality of the input current, based on detected input current Is.

When detected input current Is is deviated from a predetermined current range, for example, controller 13 determines that input current Is is abnormal. Controller 13 determines the power supply request from electric device 12, based on detected input current Is. The determination method will be described in detail later.

Controller 13 turns on LED 16 when making power transmission coil L1 perform the intermittent oscillation. Controller 13 turns on LED 17 when making power transmission coil L1 perform the continuous oscillation. When controller 13 determines that the input voltage or the input current is abnormal, controller 13 turns on both LEDs 16, 17.

As illustrated in FIG. 2, electric device 12 is an electric toothbrush, for example, in the present exemplary embodiment. As illustrated in FIG. 1, electric device 12 includes power reception coil L2, capacitor C2, diode D1, load LD, switching elements SW1, SW2, resistors R11 to R13, and controller 15. As illustrated in FIG. 1, charger 11 and electric device 12 are not electrically connected to each other.

Capacitor C2 is connected in parallel to power reception coil L2. Power reception coil L2 and capacitor C2 constitute power reception resonance circuit LC2. When magnetic fluxes of the alternating field generated in power transmission coil L1 are interlinked with power reception coil L2, power reception coil L2 generates alternating-current power.

An anode of diode D1 is connected to one end L21 of power reception coil L2. Diode D1 constitutes rectification circuit 25 (see FIG. 2), and rectifies the alternating-current power generated by power reception coil L2.

In the present exemplary embodiment, load LD is a secondary battery such as a lithium ion battery or a nickel hydrogen battery. Hereinafter, load LD will be also referred to as secondary battery LD. Secondary battery LD is charged by direct current power rectified by diode D1.

A series circuit including resistors R11, R12 is connected in parallel to secondary battery LD. That is, the series circuit including resistors R11, R12 is connected between connection point K11 connected to a positive electrode of secondary battery LD and connection point K12 connected to a negative electrode of secondary battery LD. Connection point K6 between resistor R11 and resistor R12 is connected to controller 15, and voltage Vd obtained by dividing the terminal voltage of secondary battery LD by resistors R11, R12 is supplied to controller 15.

In the present exemplary embodiment, switching elements SW1, SW2 are field-effect transistors, for example. Alternatively, switching elements SW1, SW2 may be mechanical relays or bipolar transistors. Controller 15 controls the switching of switching elements SW1, SW2.

Switching element SW1 (an example of the switch unit, an example the parallel switching element) is connected in parallel to power reception coil L2. Specifically, switching element SW1 is connected between connection point K4 connected to other end L22 of power reception coil L2 and connection point K5 connected to a cathode of diode D1.

When switching element SW1 is in an off state, power reception coil L2 becomes in the conductive state in which current flows. When switching element SW1 is turned on, the series circuit including power reception coil L2 and diode D1 is short-circuited, and power reception coil L2 becomes in the non-conductive state in which current does not flow substantially.

In the non-conductive state, some current flows due to the influence of voltage drop of diode D1. When an anode-side of diode D1 becomes at a minus voltage, current flows in power reception resonance circuit LC2. Therefore, in the non-conductive state, small current equal to or below the predetermined value flows in power reception coil L2. When the series circuit including power reception coil L2 and diode D1 is short-circuited by the operation of turning on switching element SW1, input current Is flowing in power transmission coil L1 of charger 11 is reduced.

Switching element SW2 (an example of the switch unit, an example of the series switching element) is connected between connection point K5 connected to the cathode of diode D1 and connection point K11 connected to the positive electrode of secondary battery LD. When switching element SW2 is turned on, charging of secondary battery LD becomes possible, and when switching element SW2 is turned off, charging of secondary battery LD is stopped.

Resistor R13 is a current detection resistor connected between connection point K4 connected to other end L22 of power reception coil L2 and connection point K12 connected to the negative electrode of secondary battery LD. Connection point K13 on a negative-electrode (connection point K12) side of secondary battery LD of resistor R13 is connected to controller 15. Connection point K4 on other-end L22 side of power reception coil L2 of resistor R13 is connected to controller 15 and is grounded.

Controller 15 (an example of the switch controller) includes a microcomputer, for example. Controller 15 determines, based on voltage Vd of connection point K6, whether charging of secondary battery LD is necessary. When controller 15 determines that secondary battery LD is fully charged, controller 15 turns on switching element SW1, and turns off switching element SW2. When controller 15 determines that charging of secondary battery LD is necessary, controller 15 turns off switching element SW1, and turns on switching element SW2.

Controller 15 detects charging current Ic of secondary battery LD, based on voltage Vc of connection point K13. Controller 15 controls the switching of switching element SW1, based on a detection result of charging current Ic of secondary battery LD. The switching control of switching elements SW1, SW2 by controller 15 will be described in detail later.

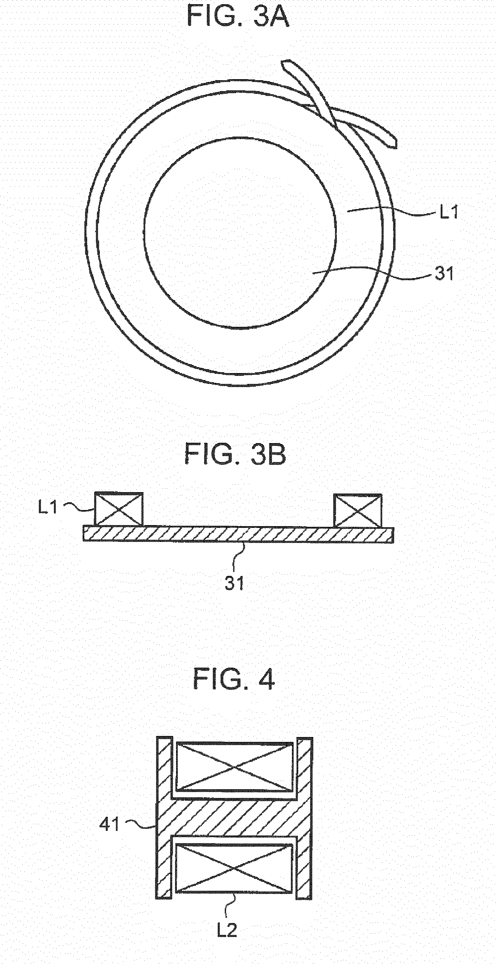

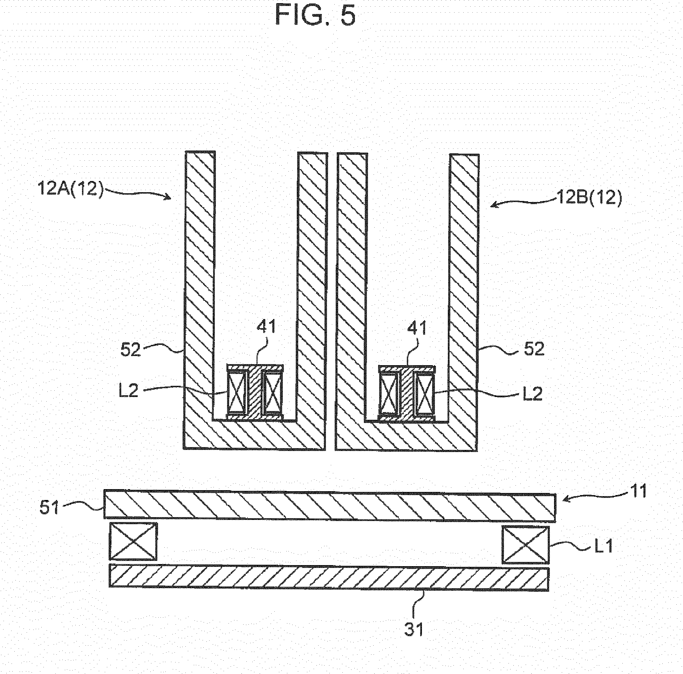

FIG. 3A is a plan view of power transmission coil L1. FIG. 3B is a sectional view of power transmission coil L1. FIG. 4 is a sectional view of power reception coil L2. FIG. 5 is a sectional view schematically illustrating a state where electric device 12 is placed on charger 11.

As illustrated in FIG. 3A and FIG. 3B, power transmission coil L1 is a circular planar coil in planar view, formed by having a copper wire wound spirally, for example. As illustrated in FIG. 3A and FIG. 3B, flat plate-like magnetic substance (for example, ferrite) 31 is disposed close to power transmission coil L1, in parallel to a magnetic flux-interlinked surface of power transmission coil L1.

As illustrated in FIG. 4, power reception coil L2 is formed by having a copper wire wound spirally around a center axis of magnetic substance (for example, ferrite) 41 of an H shape in a cross section, for example.

As illustrated in FIG. 5, with casing 52 of electric device 12 placed on ceiling plate 51 of charger 11, magnetic fluxes generated in power transmission coil L1 are interlinked with power reception coil L2. In the present exemplary embodiment, coupling coefficient k12 between power transmission coil L1 and power reception coil L2 is 0.02, for example. In the present exemplary embodiment, as illustrated in FIG. 5, two casings 52 of electric device 12 are configured to be placed on ceiling plate 51 of charger 11.

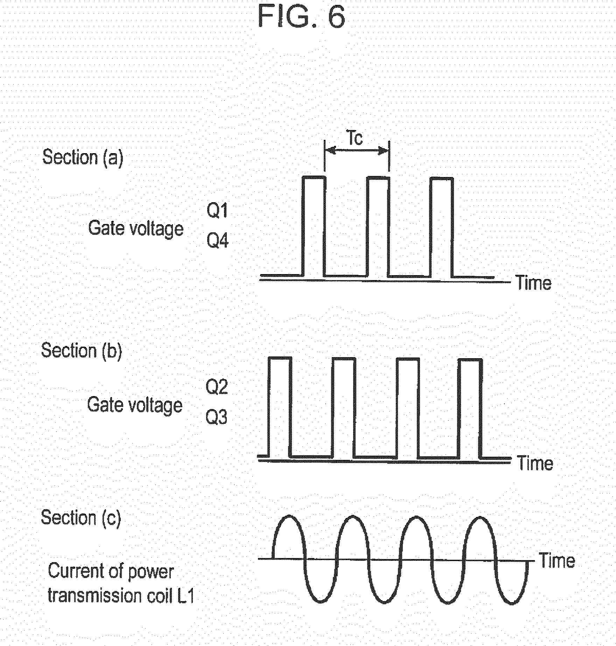

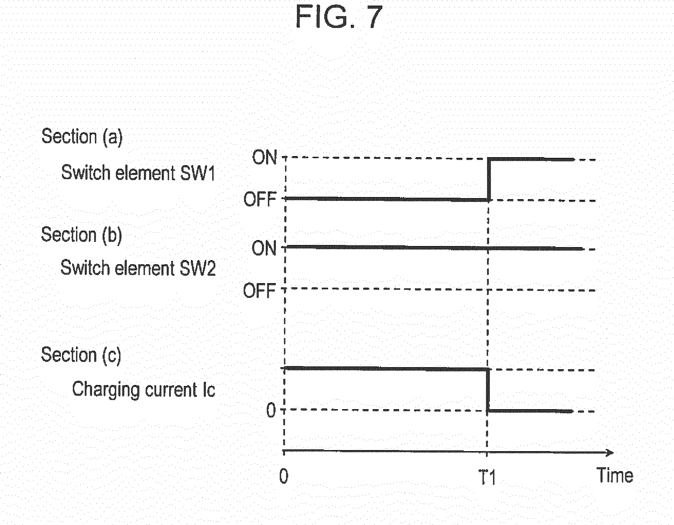

FIG. 6 is a timing chart illustrating operation of charger 11. Section (a) in FIG. 6 illustrates the switching of switching elements Q1, Q4. Section (b) in FIG. 6 illustrates the switching of switching elements Q2, Q3. Section (c) in FIG. 6 illustrates the current waveform of current flowing in power transmission coil L1. FIG. 7 is a timing chart illustrating the switching of switching elements SW1, SW2 and charging current Ic.

The charging operation of non-contact power transmission system 10 and the function of switching element SW1 according to the present exemplary embodiment will be described with reference to FIGS. 1, 6, and 7.

In order to charge secondary battery LD, controller 15 turns off switching element SW1 and turns on switching element SW2, as illustrated in FIG. 7. AC 100 V of the commercial alternating-current power source is converted to DC 5 V by adaptor 22. The DC 5 V is applied to a full-bridge circuit including switching elements Q1 to Q4.

As illustrated in sections (a), (b) in FIG. 6, according to the gate voltage supplied from controller 13 via resistors R1 to R4, switching elements Q1 to Q4 perform the switching operation, in cycle Tc (for example, 3.5 µsec, that is, drive frequency Fc of 143 kHz). By the switching operation of switching elements Q1 to Q4, high-frequency alternating current is supplied to power transmission coil L1, and power transmission coil L1 is excited, as illustrated in section (c) in FIG. 6.

Magnetic fluxes generated in power transmission coil L1 are interlinked with power reception coil L2. At the time of charging secondary battery LD, switching element SW1 is turned off. Therefore, alternating power is generated in power reception coil L2 by magnetic fluxes interlinked with power reception coil L2. The alternating power is rectified by diode D1. When secondary battery LD is charged, switching element SW2 is turned on, and secondary battery LD is charged by direct current power rectified by diode D1.

In this state, as illustrated in FIG. 7, at time T1, switching element SW1 is turned on by controller 15. Then, the series circuit including power reception coil L2 and diode D1 is short-circuited by switching element SW1, and charging current Ic does not flow from time T1, as illustrated in FIG. 7.

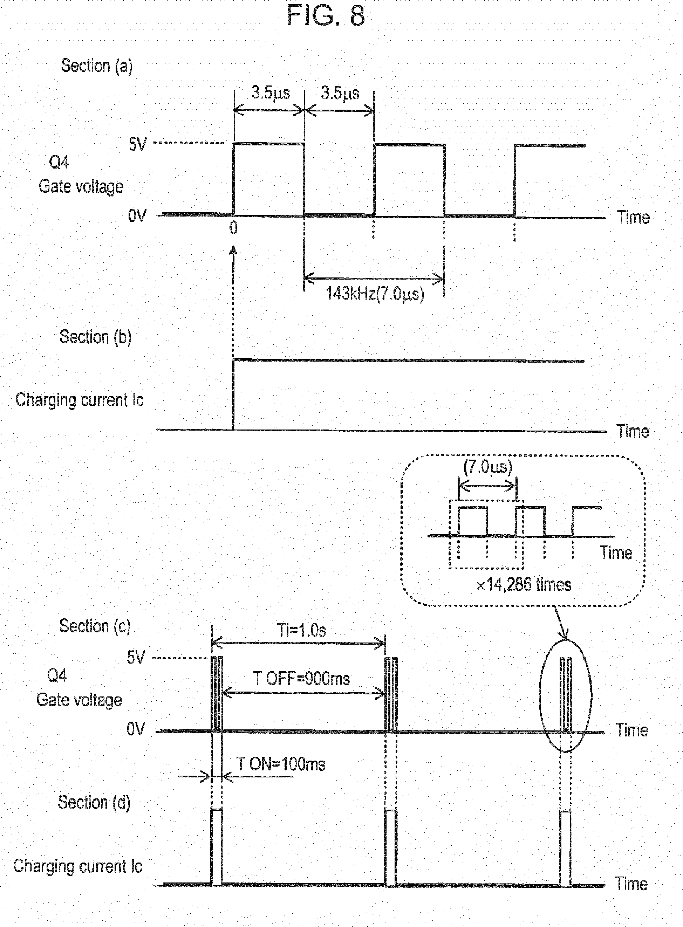

FIG. 8 is a timing chart schematically illustrating a voltage waveform and a current waveform in the continuous oscillation and the intermittent oscillation. Section (a) in FIG. 8 illustrates the switching operation of switching element Q4 during the continuous oscillation. Section (b) in FIG. 8 illustrates charging current Ic during the continuous oscillation. Section (c) in FIG. 8 illustrates the switching operation of switching element Q4 during the intermittent oscillation. Section (d) in FIG. 8 illustrates charging current Ic during the intermittent oscillation.

In FIG. 8, although only the gate voltage of switching element Q4 is illustrated, the gate voltages of switching elements Q1 to Q3 also change in the same cycle. In the operation in FIG. 8, switching element SW1 is turned off, and switching element SW2 is turned on. The operation of the continuous oscillation and the intermittent oscillation in charger 11 will be described with reference to FIG. 1 and FIG. 8.

As illustrated in section (a) in FIG. 8, controller 13 makes switching elements Q1 to Q4 perform the switching in the cycle 7.0 µsec (that is, the drive frequency of 143 kHz). In the present specification, that power transmission coil L1 continuously oscillates as described above will be referred to as continuous oscillation of power transmission coil L1.

Power transmission coil L1 performs the continuous oscillation by the switching of switching elements Q1 to Q4, and charging current Ic flows continuously in secondary battery LD, as illustrated in section (b) in FIG. 8.

As illustrated in section (c) in FIG. 8, controller 13 repeats oscillation period Ton of 100 msec and pause period Toff of 900 msec. In the present specification, that power transmission coil L1 repeats the oscillation and the pause in the predetermined cycle as described above will be referred to as intermittent oscillation of power transmission coil L1. In the present exemplary embodiment, cycle Ti of the intermittent oscillation is 1.0 sec.

During oscillation period Ton of 100 msec, the switching of switching elements Q1 to Q4 in the cycle 7.0 µsec (that is, the drive frequency of 143 kHz) is repeated by 14286 times. By the switching of switching elements Q1 to Q4, power transmission coil L1 performs the intermittent oscillation. In secondary battery LD, charging current Ic flows intermittently, as illustrated in section (d) in FIG. 8.

In this case, charging current Ic flows during 100 msec, without substantial time delay during oscillation period Ton of 100 msec.

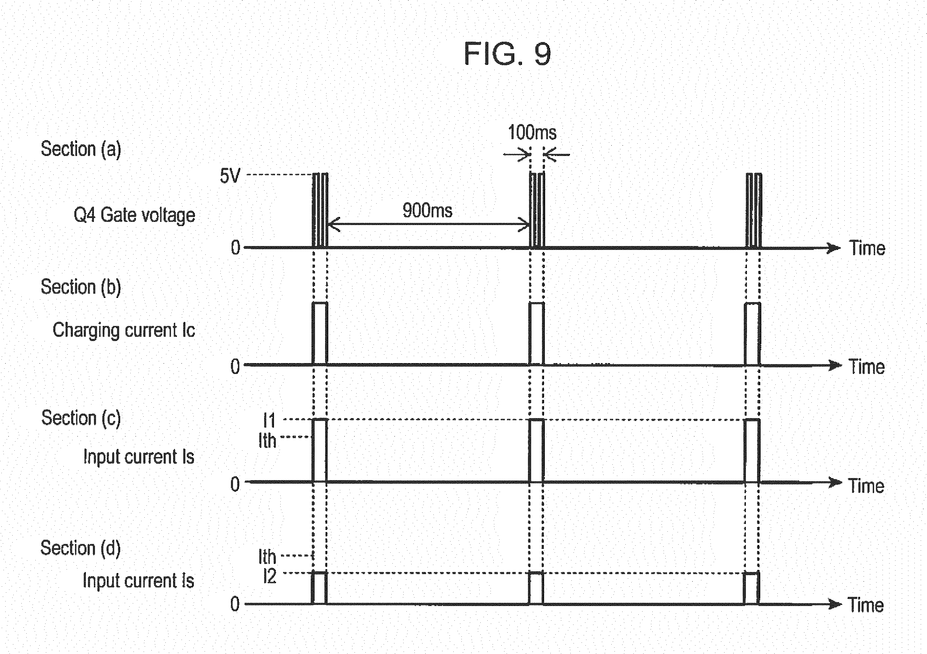

FIG. 9 is a timing chart schematically illustrating a voltage waveform and a current waveform in charger 11 during the intermittent oscillation.

Section (a) in FIG. 9 illustrates the switching of switching element Q4 during the intermittent oscillation. Section (b) in FIG. 9 illustrates charging current Ic during the intermittent oscillation. Section (c) in FIG. 9 illustrates input current Is of power transmission coil L1 when secondary battery LD is charged by the intermittent oscillation. Section (d) in FIG. 9 illustrates input current Is of power transmission coil L1 when secondary battery LD is not charged by the intermittent oscillation.

With reference to FIG. 1 and FIG. 9, description will be given of a method for controller 13 to determine whether charger 11 is charging secondary battery LD with electric device 12 placed on charger 11.

Sections (a), (b) in FIG. 9 are the same as sections (c), (d) in FIG. 8, respectively.

That is, when making power transmission coil L1 perform the intermittent oscillation, controller 13 repeats the oscillation period of 100 msec and the pause period of 900 msec, as illustrated in section (a) in FIG. 9. Power transmission coil L1 performs the intermittent oscillation by the switching of switching elements Q1 to Q4. In secondary battery LD, charging current Ic flows during 100 msec without substantial time delay during the oscillation period of 100 msec, as illustrated in section (b) in FIG. 9.

As illustrated in section (b) in FIG. 9, when charging current Ic flows in secondary battery LD, input current Is of current value I1 (for example, 0.2A) is supplied to power transmission coil L1, as illustrated in section (c) in FIG. 9.

When charging current Ic is not flowing in secondary battery LD, input current Is of current value 12 (for example, 0.1A) is supplied to power transmission coil L1, as illustrated in section (d) in FIG. 9.

When electric device 12 is not placed on charger 11, charging current Ic does not flow in secondary battery LD. Even when electric device 12 is placed on charger 11, when switching element SW1 is turned on, charging current Ic does not flow in secondary battery LD.

As can be understood from sections (c), (d) in FIG. 9, in the case where alternating-current power is generated in power reception coil L2 by magnetic fluxes generated in power transmission coil L1, input current Is of power transmission coil L1 increases as compared with the case where alternating-current power is not generated in power reception coil L2 by magnetic fluxes generated in power transmission coil L1.

A current value of input current Is when electric device 12 is not placed on charger 11 is substantially the same as a current value of input current Is when switching element SW1 is turned on even when electric device 12 is placed on charger 11.

Current value I1 in the present exemplary embodiment is 0.2 A, for example, and current value 12 in the present exemplary embodiment is 0.1A, for example. In the present exemplary embodiment, a duty ratio of the intermittent oscillation is set to one tenth, as illustrated in section (a) in FIG. 9.

Therefore, an average value of input current Is becomes 0.02A or 0.01 A, for example, which is a very small value. Accordingly, when determining a magnitude of input current Is based on the threshold value, a difference from the threshold value becomes also a very small value, and there is a possibility that a magnitude relation between input current Is and the threshold value cannot be determined with high accuracy.

Thus, in the present exemplary embodiment, controller 13 detects input current Is only during the oscillation period of 100 msec in the intermittent oscillation. With this configuration, the current value of detected input current Is becomes 0.2 A or 0.1 A. Because controller 13 makes power transmission coil L1 perform the intermittent oscillation by controlling the switching of switching elements Q1 to Q4, it is possible to detect input current Is, during only the oscillation period of 100 msec.

Controller 13 holds threshold value Ith for determining the magnitude of input current Is. However, the magnitude of threshold value Ith is set to I1 > Ith > 12. In the present exemplary embodiment, Ith is 0.15 A, for example.

Therefore, in the present exemplary embodiment, the difference between input current Is and threshold value Ith can be made large, and a magnitude relation between input current Is and threshold value Ith can be determined with high accuracy. As a result, controller 13 can determine with high accuracy whether charger 11 is charging secondary battery LD of electric device 12.

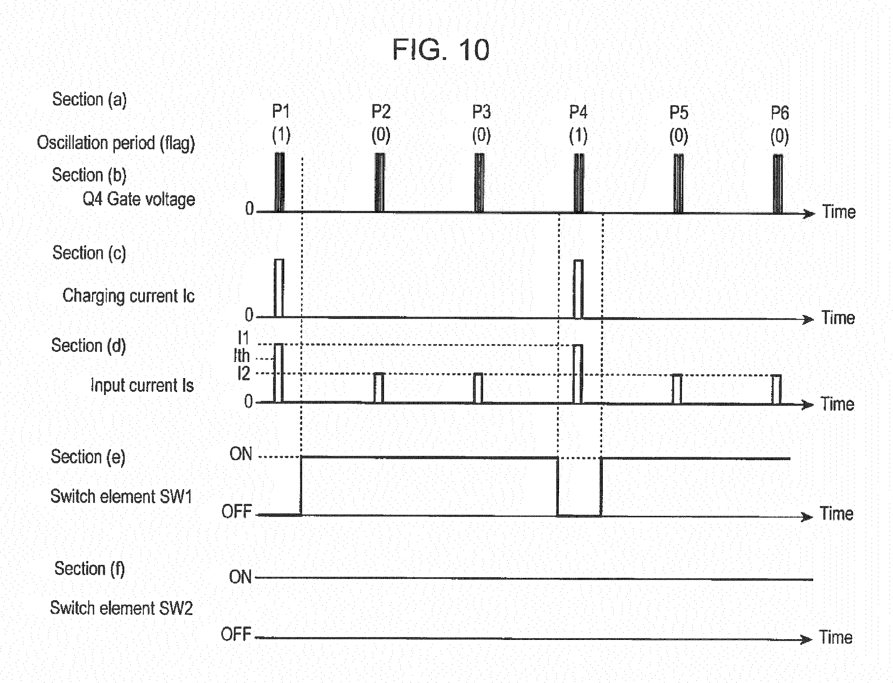

FIG. 10 is a timing chart schematically illustrating a voltage waveform and a current waveform in charger 11 during the intermittent oscillation, and the switching of switching elements SW1, SW2 of electric device 12 during the intermittent oscillation.

Section (a) in FIG. 10 illustrates the oscillation period in the intermittent oscillation. Numerals within parentheses are flags schematically expressing the switching of switching element SW1. Section (b) in FIG. 10 illustrates the switching of switching element Q4 during the intermittent oscillation. Section (c) in FIG. 10 illustrates charging current Ic during the intermittent oscillation.

Section (d) in FIG. 10 illustrates input current Is during the intermittent oscillation. Section (e) in FIG. 10 illustrates the switching of switching element SW1 during the intermittent oscillation. Section (f) in FIG. 10 illustrates the switching of switching element SW2 during the intermittent oscillation.

A method for controller 13 to determine presence of a power supply request from electric device 12 will be described with reference to FIG. 1 and FIG. 10.

Sections (b), (c) in FIG. 10 are the same as sections (a), (b) in FIG. 9, respectively. In charger 11 in the standby state, power transmission coil L1 performs the intermittent oscillation by the switching of switching elements Q1 to Q4 as illustrated in section (b) in FIG. 10. Electric device 12 is placed on charger 11.

It is assumed that controller 15 of electric device 12 determines, based on voltage Vd, before being placed on charger 11, that charging of secondary battery LD is necessary. Therefore, as illustrated in sections (e), (f) in FIG. 10, when electric device 12 is placed on charger 11, switching element SW1 is turned off and switching element SW2 is turned on.

As illustrated in section (c) in FIG. 10, because power transmission coil L1 performs the intermittent oscillation, charging current Ic flows during oscillation period P1 of 100 msec during the intermittent oscillation.

When controller 15 of electric device 12 detects charging current Ic, controller 15 determines that electric device 12 is placed on charger 11. As illustrated in section (e) in FIG. 10, when controller 15 determines that electric device 12 is placed on charger 11, controller 15 keeps switching element SW1 in the on state during subsequent two oscillation periods P2, P3 each of 100 msec.

Controller 15 of electric device 12 recognizes in advance cycle Ti (for example, 1.0 sec) of the intermittent oscillation, the oscillation period (for example, 100 msec), and the pause period (for example, 900 msec) in charger 11.

As illustrated in section (c) in FIG. 10, because switching element SW1 is kept in the on state, charging current Ic does not flow during oscillation periods P2, P3.

Therefore, as described with reference to FIG. 9, input current Is of power transmission coil L1, which is in current value I1 during oscillation period P1, decreases to current value I2 during oscillation periods P2, P3, as illustrated in section (d) in FIG. 10. Controller 13 determines an on/off state of switching element SW1, by determining whether input current Is is less than threshold value Ith.

Also during oscillation periods P4, P5, P6, control similar to that during oscillation periods P1, P2, P3 is carried out. That is, as illustrated in section (e) in FIG. 10, controller 15 carries out the operation (an example of the switching operation) of keeping switching element SW1 in the off state during one oscillation period P4 and keeping switching element SW1 in the on state during subsequent two oscillation periods P5, P6.

Therefore, as illustrated in section (d) in FIG. 10, input current Is of power transmission coil L1 becomes equal to or above threshold value Ith during oscillation period P4 and becomes less than threshold value Ith during oscillation periods P5, P6.

Section (a) in FIG. 10 expresses the on/off state of switching element SW1 in which the flag is expressed as "1" when switching element SW1 is in the off state, and the flag is expressed as "0" when switching element SW1 is in the on state. Therefore, flags sequentially become "1, 0, 0, 1, 0, 0" for oscillation periods P1 to P6, as illustrated in section (a) in FIG. 10.

In FIG. 10, because it is assumed that one electric device 12 is placed on charger 11, the on/off state of switching element SW1 and whether input current Is is less than threshold value Ith coincide with each other.

In the intermittent oscillation, during two (a number equal to an upper limit number of electric devices 12 that can be placed on charger 11) oscillation periods subsequent to the oscillation period during which input current Is is equal to or above threshold value Ith (that is, the oscillation period of the flag "1"), when there exists at least one oscillation period during which input current Is is less than threshold value Ith (that is, the oscillation period of the flag "0"), controller 13 determines that there is a power supply request from electric device 12.

When controller 13 determines that there is a power supply request from electric device 12, controller 13 switches power transmission coil L1 from the intermittent oscillation to the continuous oscillation.

In the intermittent oscillation, during two oscillation periods subsequent to the oscillation period during which input current Is is equal to or above threshold value Ith, when there exists only one oscillation period of input current Is equal to or above threshold value Ith (that is, the oscillation period of the flag "1") and the oscillation period of input current Is less than threshold value Ith does not exist, controller 13 determines that a metal foreign substance is placed on charger 11. When controller 13 determines that the metal foreign substance is placed on charger 11, controller 13 turns on both LEDs 16, 17.

When electric device 12 is already placed on charger 11 and secondary battery LD of electric device 12 is being charged, there is a case where second electric device 12 is additionally placed on charger 11. In this case, charger 11 is already in the continuous oscillation.

Therefore, charging current Ic flows continuously in secondary battery LD of second electric device 12, and as illustrated in section (c) in FIG. 7, controller 15 of second electric device 12 detects charging current Ic. Then, controller 15 of second electric device 12 determines that charger 11 is already in the continuous oscillation, and keeps switching element SW1 in the off state.

After electric device 12 is placed on charger 11, before charger 11 starts the continuous oscillation, there is a case where second electric device 12 is subsequently placed on charger 11. In this case, in both electric devices 12, switching elements SW1 are switched, as illustrated in section (e) in FIG. 10.

As illustrated in FIG. 5, also when plug 23 of adaptor 22 of charger 11 is inserted in outlet 24 in the state where two electric devices 12 are placed on charger 11, in both electric devices 12, switching elements SW1 are switched as illustrated in section (e) in FIG. 10.

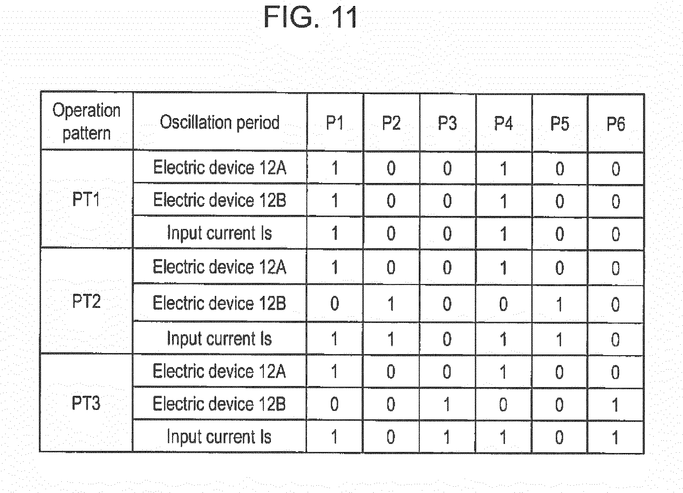

The operation pattern when switching elements SW1 of two electric devices 12 are switched as described above will be described with reference to FIG. 11.

FIG. 11 illustrates, in a table, operation patterns of two electric devices 12. In FIG. 11, first electric device 12 (the electric device on the left side in FIG. 5, for example) is electric device 12A (an example of the power reception device), and second electric device 12 (the electric device on the right side in FIG. 5, for example) is electric device 12B (an example of other power reception device).

FIG. 11 illustrates an on/off state of switching element SW1 of electric devices 12A, 12B, by flags, in a similar manner to that of section (a) in FIG. 10. That is, in FIG. 11, the flag is expressed as "1" when switching element SW1 of electric devices 12A, 12B is in the off state, and the flag is expressed as "0" when switching element SW1 of electric devices 12A, 12B is in the on state.

In FIG. 11, the flag "1" expresses the case where input current Is is less than threshold value Ith, and the flag "0" expresses the case where input current Is is equal to or above threshold value Ith.

In FIG. 11, because it is assumed that two electric devices 12A, 12B are placed on charger 11, there is a case where a switching pattern of switching element SW1 and a pattern of whether input current Is is less than threshold value Ith do not coincide with each other.

In FIG. 11, as illustrated in section (e) in FIG. 10, synchronously with the intermittent oscillation of charger 11, "off, on, on" of switching element SW1, that is, "1, 0, 0" indicated in the flag, is repeated. Therefore, three cases are assumed where switching patterns of switching elements SW1 of two electric devices 12A, 12B coincide with each other, are deviated from each other by one cycle of the intermittent oscillation, and are deviated from each other by two cycles of the intermittent oscillation.

In operation pattern PT1 in FIG. 11, switching timings of switching elements SW1 of electric devices 12A, 12B coincide with each other. In this case, the pattern of whether input current Is is less than threshold value Ith coincides with the switching pattern of switching element SW1. Therefore, a pattern of whether input current Is of operation pattern PT1 is less than threshold value Ith becomes a repetition of "1, 0, 0" indicated in the flag as illustrated in FIG. 11.

In operation pattern PT2, the switching timing of switching element SW1 of electric device 12B is delayed by one cycle of the intermittent oscillation, from the switching timing of switching element SW1 of electric device 12A. In operation pattern PT3, the switching timing of switching element SW1 of electric device 12B is delayed by two cycles of the intermittent oscillation, from the switching timing of switching element SW1 of electric device 12A.

When two electric devices 12A, 12B are placed on charger 11, even when switching element SW1 of electric device 12A is turned on, for example, input current Is becomes equal to or above threshold value Ith when switching element SW1 of electric device 12B is in the off state.

Therefore, in operation patterns PT2, PT3, when one of switching elements SW1 of electric devices 12A, 12B is in the off state, input current Is becomes equal to or above threshold value Ith, and when both switching elements SW1 of electric devices 12A, 12B are in the on state, input current Is becomes less than threshold value Ith.

Therefore, a pattern of whether input current Is of operation pattern PT2 is less than threshold value Ith becomes a repetition of "1, 1, 0" indicated in the flag as illustrated in FIG. 11. A pattern of whether input current Is of operation pattern PT3 is less than threshold value Ith becomes a repetition of "1, 0, 1" indicated in the flag as illustrated in FIG. 11.

In the present exemplary embodiment, a switching pattern of switching elements SW1 of two electric devices 12A, 12B becomes a repetition of "1, 0, 0" indicated in the flag. Therefore, both when the switching timings of switching elements SW1 of two electric devices 12A, 12B coincide with each other and are deviated from each other, during the two oscillation periods subsequent to the oscillation period during which input current Is becomes equal to or above threshold value Ith, there exists at least one oscillation period during which input current Is becomes less than threshold value Ith (that is, the period of the flag "0").

When only one electric device 12 is placed on charger 11, in a similar manner to that of operation pattern PT1 in FIG. 11, during both the two oscillation periods subsequent to the oscillation period during which input current Is becomes equal to or above threshold value Ith, input currents Is become less than threshold value Ith (that is, the flag "0").

When a metal foreign substance is placed on charger 11, alternating-current power is generated by having magnetic fluxes always interlinked with the metal foreign substance. Therefore, in every oscillation period, input current Is becomes equal to or above threshold value Ith, and there exists no oscillation period during which input current Is becomes less than threshold value Ith. That is, the flag becomes "1" during each oscillation period, and the oscillation period during which the flag becomes "0" does not exist.

Thus, in the present exemplary embodiment, in the intermittent oscillation, controller 13 determines, during the oscillation period, whether input current Is is less than threshold value Ith, and first detects the oscillation period during which input current Is becomes equal to or above threshold value Ith. Accordingly, controller 13 detects that a certain object such as electric device 12 or a metal foreign substance is placed on charger 11.

Next, controller 13 determines whether input current Is is less than threshold value Ith during the subsequent two oscillation periods. When controller 13 determines that input current Is is less than threshold value Ith during at least one oscillation period, controller 13 determines that there is a power supply request from electric device 12 placed on charger 11, and changes the power transmission coil from the intermittent oscillation to the continuous oscillation.

When controller 13 determines that input current Is is equal to or above threshold value Ith during both the subsequent two oscillation periods, controller 13 determines that a metal foreign substance is placed on charger 11, and continues the intermittent oscillation without switching to the continuous oscillation.

In the present exemplary embodiment, when controller 13 first detects the oscillation period during which input current Is becomes less than threshold value Ith, after detecting the oscillation period during which input current Is becomes equal to or above threshold value Ith, controller 13 switches the power transmission coil from the intermittent oscillation to the continuous oscillation.

Therefore, in the case of operation patterns PT1 and PT3 in FIG. 11, controller 13 switches the power transmission coil from the intermittent oscillation to the continuous oscillation, at an end time of oscillation period P2. That is, the charging is started after a total time (for example, 1.1 sec) of one cycle (Ti) and the oscillation period (Ton) of the intermittent oscillation passes, after detecting the oscillation period during which input current Is becomes equal to or above threshold value Ith.

In the case of operation pattern PT2 in FIG. 11, controller 13 switches the power transmission coil from the intermittent oscillation to the continuous oscillation, at an end time of oscillation period P3. That is, the charging is started after a total time (for example, 2.1 sec) of two cycles (2 × Ti) and the oscillation period (Ton) of the intermittent oscillation passes, after detecting the oscillation period during which input current Is becomes equal to or above threshold value Ith.

As described above, in the present exemplary embodiment, the charging is started, after a total time (for example, 2.1 sec) in maximum of two cycles (2 × Ti) and the oscillation period (Ton) of the intermittent oscillation passes, after the detection of the oscillation period during which input current Is becomes equal to or above threshold value Ith.

The time after the detection of the oscillation period during which input current Is becomes equal to or above threshold value Ith until the start of the charging depends on cycle Ti of the intermittent oscillation. Therefore, by shortening cycle Ti of the intermittent oscillation, the time until the start of the charging can be shortened.

As described with reference to FIG. 10 and FIG. 11, when controller 13 of charger 11 determines that there is a power supply request from electric device 12, controller 13 switches the power transmission coil from the intermittent oscillation to the continuous oscillation. By this continuous oscillation, the charging of secondary battery LD of electric device 12 is started.

When controller 15 of electric device 12 determines that secondary battery LD is fully charged, controller 15 turns on switching element SW1. When switching elements SW1 of all electric devices 12 placed on charger 11 are turned on, input current Is of power transmission coil L1 becomes less than threshold value Ith.

When controller 13 of charger 11 detects that input current Is is less than threshold value Ith during the continuous oscillation, controller 13 determines that there is no power supply request from electric device 12, and switches the power transmission coil L1 from the continuous oscillation to the intermittent oscillation.

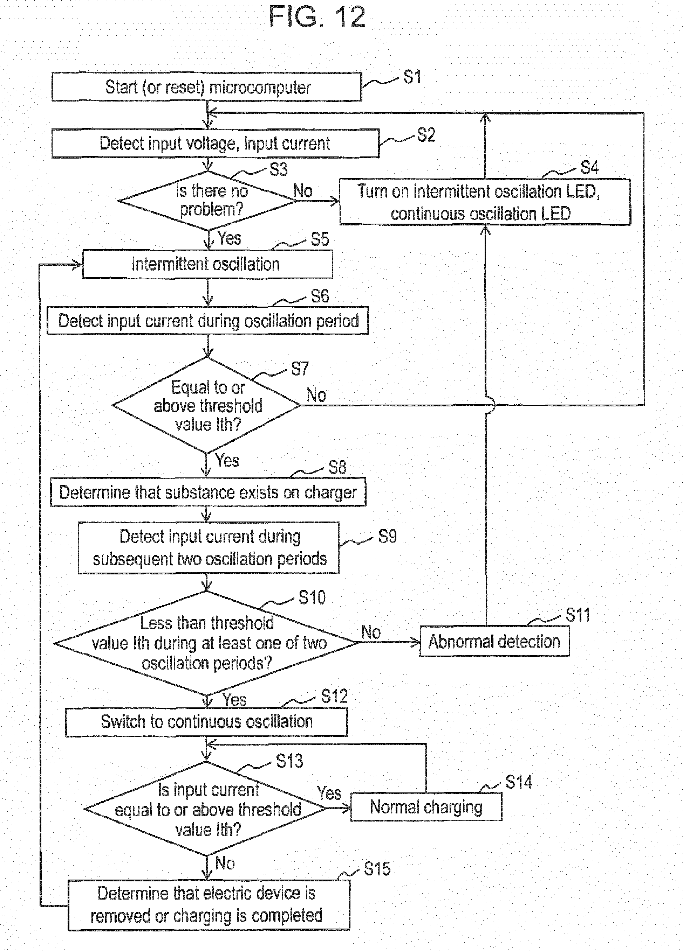

FIG. 12 is a flowchart schematically illustrating an operation procedure of controller 13 of charger 11 according to the present exemplary embodiment.

In step S1, when plug 23 of adaptor 22 is inserted to outlet 24, for example, the microcomputer of controller 13 is started or reset.

In step S2, controller 13 detects the input voltage of direct-current power source Vcc, based on voltage Vi. Controller 13 detects input current Is of power transmission coil L1, based on voltage Vs.

In step S3, controller 13 determines whether values of the detected input voltage and input current Is have no problem. When controller 13 determines that a value of the input voltage or input current Is is abnormal (No in step S3), controller 13 turns on both LED 16 for the intermittent oscillation and LED 17 for the continuous oscillation, and notifies a user of the abnormality, in step S4. Thereafter, the process returns to step S2.

When none of the values of the input voltage and input current Is is abnormal (Yes in step S3), controller 13 makes power transmission coil L1 perform the intermittent oscillation, in step S5. In step S6, controller 13 detects input current Is during the oscillation period of the intermittent oscillation.

In step S7, controller 13 determines whether detected input current Is is equal to or above threshold value Ith. When detected input current Is is less than threshold value Ith (No in step S7), the process returns to step S2.

When detected input current Is is equal to or above threshold value Ith (Yes in step S7), controller 13 determines in step S8 that electric device 12 or a metal foreign substance is placed on charger 11. In step S9, controller 13 detects input current Is during subsequent two oscillation periods.

In step S10, controller 13 determines whether input current Is is less than threshold value Ith during at least one of the two oscillation periods.

When input current Is is equal to or above threshold value Ith during all the two oscillation periods (No in step S10), controller 13 determines in step S11 that an abnormality such as placement of a metal foreign substance on charger 11 is detected, and the process proceeds to step S4.

When input current Is is less than threshold value Ith during at least one of the two oscillation periods (Yes in step S10), controller 13 switches in step S12 the power transmission coil from the intermittent oscillation to the continuous oscillation.

In step S13, controller 13 determines whether input current Is is equal to or above threshold value Ith. When input current Is is equal to or above threshold value Ith (Yes in step S13), controller 13 determines in step S14 that the charging is carried out normally. Thereafter, the process returns to step S13.

When input current Is is less than threshold value Ith (No in step S13), controller 13 determines in step S15 that electric device 12 is removed from above charger 11 or that the charging of secondary battery LD is completed. Thereafter, the process returns to step S5.

As described above, electric device 12 of non-contact power transmission system 10 according to the first exemplary embodiment includes switching element SW1 connected in parallel to power reception coil L2.

During the oscillation period of the intermittent oscillation, controller 15 of electric device 12 keeps switching element SW1 in the off state during one oscillation period, and keeps switching element SW1 in the on state during the subsequent two oscillation periods.

When controller 13 of charger 11 determines that input current Is of power transmission coil L1 is equal to or above threshold value Ith during one oscillation period, controller 11 determines whether input current Is is less than threshold value Ith during the subsequent two oscillation periods.

When controller 13 determines that input current Is is less than threshold value Ith during at least one of the subsequent two oscillation periods, controller 13 determines that there is a power supply request from electric device 12, and switches the power transmission coil from the intermittent oscillation to the continuous oscillation.

According to the first exemplary embodiment, in a simple configuration of including switching element SW1 connected in parallel to power reception coil L2, controller 13 can determine a power supply request from electric device 12 even when two electric devices 12 are placed on charger 11.

When controller 13 determines that input current Is is equal to or above threshold value Ith during both the subsequent two oscillation periods, controller 13 determines that a metal foreign substance is placed on charger 11, and continues the intermittent oscillation without switching to the continuous oscillation. Therefore, according to the first exemplary embodiment, a metal foreign substance can be detected in a simple configuration.

In FIG. 12, after the power transmission coil is switched from the intermittent oscillation to the continuous oscillation, until controller 13 determines that electric device 12 is removed from above charger 11 or the charging of secondary battery LD is completed (step S15), the continuous oscillation is continued. However, the operation in the first exemplary embodiment is not limited to the above operation.

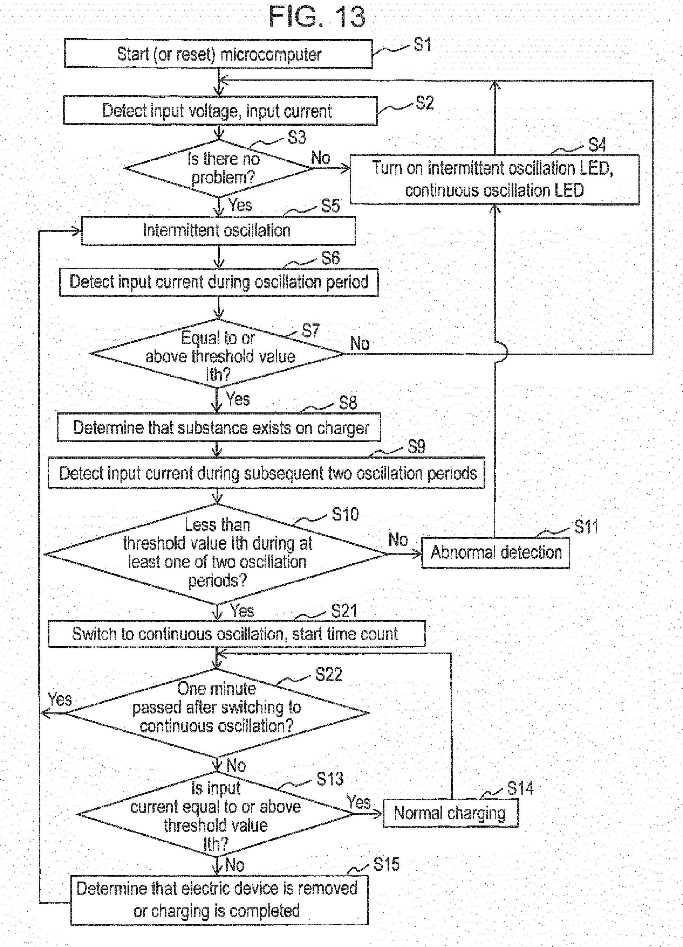

FIG. 13 is a flowchart schematically illustrating an operation procedure different from the operation procedure of controller 13 of charger 11 in the first exemplary embodiment in FIG. 12. In FIG. 13, the same reference marks are used to designate steps that are the same as the steps in FIG. 12, and detailed description will be omitted.

In step S10, when input current Is is less than threshold value Ith during at least one of the two oscillation periods (Yes in step S10), controller 13 switches the power transmission coil from the intermittent oscillation to the continuous oscillation and starts counting the lapse time, in step S21.

In step S22, controller 13 determines whether one minute has passed after the switching to the continuous oscillation. When one minute has not passed after the switching to the continuous oscillation (No in step S22), the process proceeds to step S13. When one minute has passed after the switching to the continuous oscillation (Yes in step S22), the process proceeds to step S5, and the process of steps S5 to S11 is repeated.

As described above, according to the operation in FIG. 13, after the power transmission coil is switched to the continuous oscillation, the power transmission coil is switched to the intermittent oscillation every one minute. Therefore, even when a metal foreign substance is placed on charger 11 during the charging of secondary battery LD, abnormality can be detected in steps S10, S11, and the user can be notified of the abnormality in step S4.

### SECOND EXEMPLARY EMBODIMENT

In the first exemplary embodiment, electric device 12 includes two switching elements SW1, SW2. However, like in a second exemplary embodiment described below, the electric device may be configured to include one switching element. In the case of the second exemplary embodiment in which the electric device includes one switching element, a number of parts can be reduced as compared with the case of the first exemplary embodiment in which the electric device includes two switching elements, and cost can be reduced.

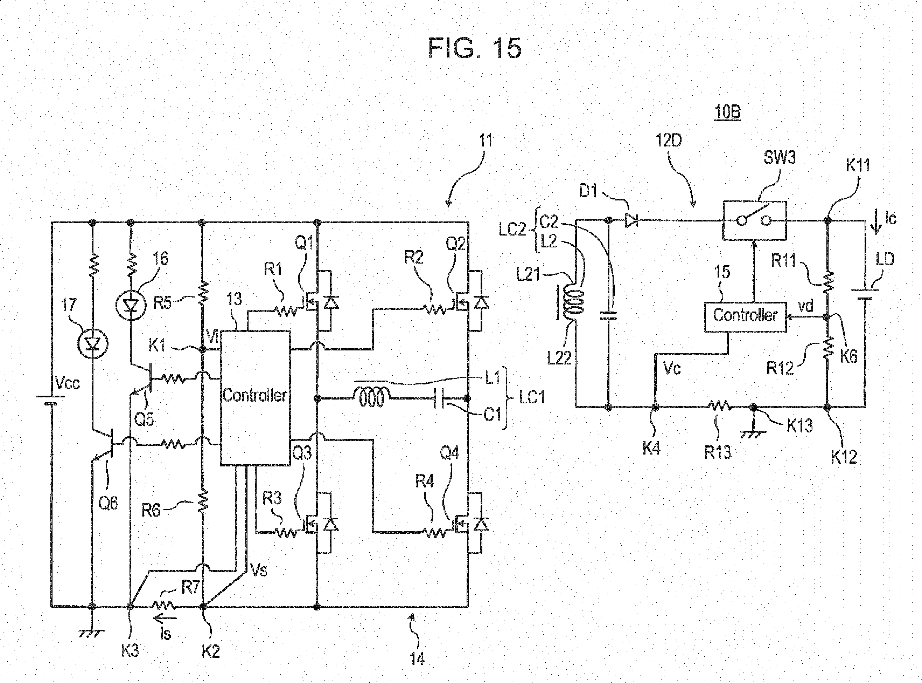

FIG. 15 schematically illustrates a circuit of non-contact power transmission system 10B according to the second exemplary embodiment. The present exemplary embodiment is effective when the coupling coefficient between power transmission coil L1 and power reception coil L2 is large. In the present exemplary embodiment, coupling coefficient k12 between power transmission coil L1 and power reception coil L2 is 0.2, for example. Hereinafter, the second exemplary embodiment will be described with emphasis on difference from the first exemplary embodiment.

As illustrated in FIG. 15, non-contact power transmission system 10B according to the second exemplary embodiment includes charger 11 (an example of the power transmission device), and electric device 12D (an example of the power reception device).

Electric device 12D includes power reception coil L2, capacitor C2, diode D1, secondary battery LD, switching element SW3, resistors R11 to R13, and controller 15.

Switching element SW3 (an example of the switch unit, an example of the series switching element) is connected in series between power reception coil L2 and secondary battery LD. Specifically, switching element SW3 is connected between connection point K11 connected to the positive electrode of secondary battery LD and the cathode of diode D1. When switching element SW3 is in an on state, power reception coil L2 becomes in a conductive state.

When switching element SW3 is turned off, power reception coil L2 is released from secondary battery LD, and power reception coil L2 becomes in a non-conductive state in which current does not flow substantially. When power reception coil L2 is released from secondary battery LD by turning off switching element SW3, input current Is of charger 11 is reduced.

When controller 15 (an example of the switch controller) determines that secondary battery LD is fully charged, controller 15 turns off switching element SW3. When controller 15 determines that charging of secondary battery LD is necessary, controller 15 turns on switching element SW3.

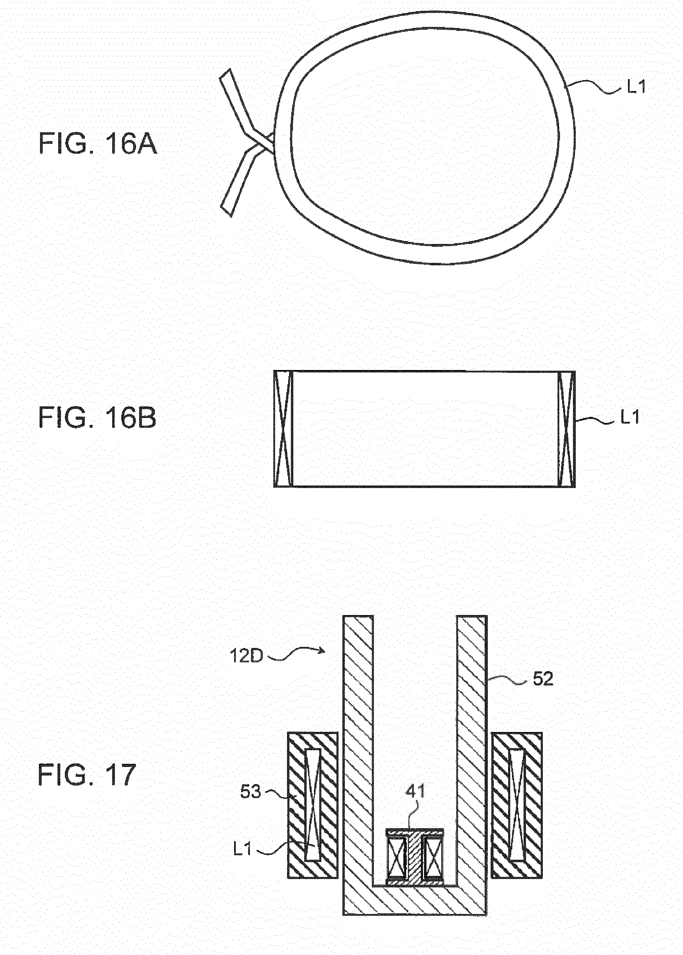

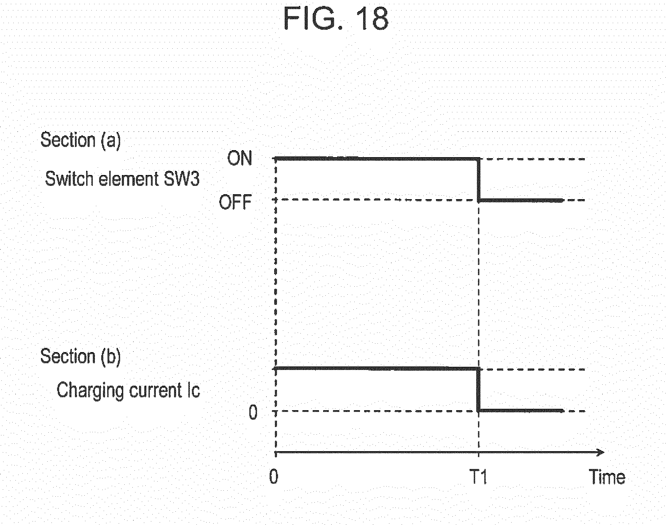

FIG. 16A and FIG. 16B are a plan view and a sectional view of power transmission coil L1 according to the second exemplary embodiment. FIG. 17 is a sectional view schematically illustrating a state where electric device 12D is inserted in charger 11. FIG. 18 is a timing chart illustrating the switching of switching element SW3 and charging current Ic.

As illustrated in FIG. 16A and FIG. 16B, power transmission coil L1 is formed by having a copper wire wound cylindrically, for example. In the present exemplary embodiment, power transmission coil L1 is an air-core coil.

As illustrated in FIG. 17, when casing 52 of electric device 12D including power reception coil L2 is inserted to an inside of housing 53 of power transmission coil L1 of charger 11, magnetic fluxes generated in power transmission coil L1 are interlinked with power reception coil L2. In the present exemplary embodiment, one electric device 12D can be inserted to one charger 11, for example.

As illustrated in FIG. 18, controller 15 turns on switching element SW3 when charging secondary battery LD. Accordingly, power reception coil L2 and secondary battery LD are electrically connected to each other.

In a similar manner to that in the first exemplary embodiment, magnetic fluxes generated in power transmission coil L1 are interlinked with power reception coil L2. Alternating power is generated by magnetic fluxes interlinked with power reception coil L2. The alternating power is rectified by diode D1. When charging secondary battery LD, switching element SW3 is turned on. Therefore, secondary battery LD is charged by direct current power rectified by diode D1.

As illustrated in FIG. 18, at time T1, switching element SW3 is turned off by controller 15. Then, power reception coil L2 is disconnected from secondary battery LD, and power reception coil L2 becomes in the non-conductive state. As a result, charging current Ic does not flow from time T1.

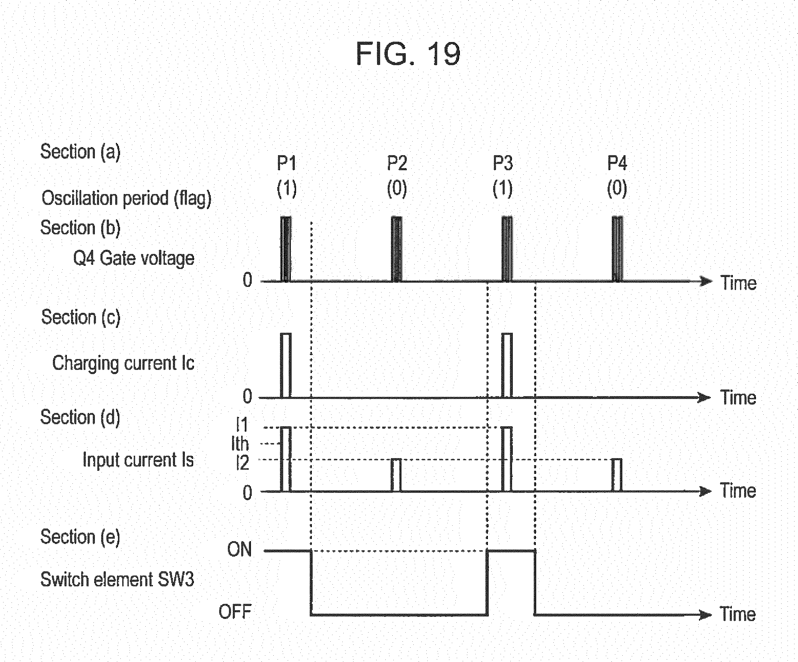

FIG. 19 is a timing chart schematically illustrating a voltage waveform and a current waveform in charger 11 during the intermittent oscillation, and the switching of switching element SW3 in electric device 12D during the intermittent oscillation, according to the second exemplary embodiment.

Section (a) in FIG. 19 illustrates the oscillation period of the intermittent oscillation. Numerals within parentheses are flags that schematically express an on/off state of switching element SW3. Section (b) in FIG. 19 illustrates the switching of switching element Q4 during the intermittent oscillation.

Section (c) in FIG. 19 illustrates charging current Ic during the intermittent oscillation. Section (d) in FIG. 19 illustrates input current Is during the intermittent oscillation. Section (e) in FIG. 19 illustrates the switching of switching element SW3 during the intermittent oscillation.

Controller 15 of electric device 12D determines that, before insertion to charger 11, charging of secondary battery LD is necessary, based on voltage Vd. Therefore, as illustrated in section (e) in FIG. 19, when electric device 12D is inserted to charger 11, switching element SW3 is turned on.

As illustrated in section (c) in FIG. 19, because power transmission coil L1 performs the intermittent oscillation, charging current Ic flows during oscillation period P1 of 100 msec in the intermittent oscillation. When controller 15 of electric device 12D detects charging current Ic, controller 15 determines that electric device 12D is inserted to charger 11.

As illustrated in section (e) in FIG. 19, when controller 15 determines that electric device 12D is inserted to charger 11, controller 15 keeps switching element SW3 in the off state during subsequent one oscillation period P2 of 100 msec. Controller 15 of electric device 12D is programmed in advance with cycle Ti (for example, 1.0 sec) of the intermittent oscillation in charger 11, the oscillation period (for example, 100 msec), and the pause period (for example, 900 msec).

As illustrated in section (c) in FIG. 19, because switching element SW3 is turned off, charging current Ic does not flow during oscillation period P2.

Therefore, as described with reference to FIG. 9, input current Is of power transmission coil L1, which is in current value I1 during oscillation period P1, decreases to current value 12 during oscillation period P2, as illustrated in section (d) in FIG. 19. Controller 13 determines whether input current Is is less than threshold value Ith, and determines the on/off state of switching element SW3.

Also during oscillation periods P3, P4, the control similar to that during oscillation periods P1, P2 is carried out. That is, as illustrated in section (e) in FIG. 19, controller 15 keeps switching element SW3 in the on state during one oscillation period P3, and keeps switching element SW3 in the off state during subsequent one oscillation period P4 (an example of the switching operation).

Therefore, as illustrated in section (d) in FIG. 19, input current Is of power transmission coil L1 becomes equal to or above threshold value Ith during oscillation period P3, and becomes less than threshold value Ith during oscillation period P4.

Section (a) in FIG. 19 expresses the on/off state of switching element SW3, in which the flag is expressed as "1" when switching element SW3 is in the on state, and the flag is expressed as "0" when switching element SW3 is in the off state. As illustrated in section (a) in FIG. 19, flags sequentially become "1, 0, 1, 0" for oscillation periods P1 to P4.

Hereinafter, switching element SW3 is switched in the operation pattern similar to that in the first exemplary embodiment. In a similar manner to that in the first exemplary embodiment, the intermittent oscillation and the continuous oscillation are switched to each other based on the comparison between input current Is and threshold value Ith.

### OTHERS

(1) The non-contact power transmission system according to the first exemplary embodiment is not limited to the electromagnetic induction system illustrated in FIG. 1, and may be a magnetic resonance system.

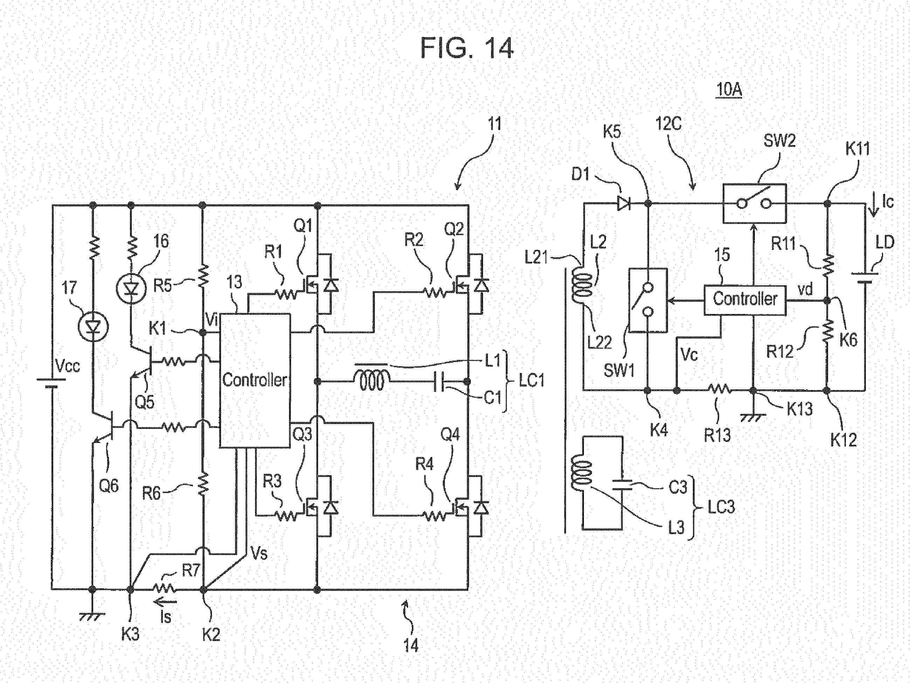

FIG. 14 schematically illustrates a circuit of non-contact power transmission system 10A of the magnetic resonance system. Hereinafter, non-contact power transmission system 10A illustrated in FIG. 14 will be described with emphasis on difference from FIG. 1.

Non-contact power transmission system 10A of the magnetic resonance system includes charger 11 (an example of the power transmission device) and electric device 12C (an example of the power reception device), as illustrated in FIG. 14. Electric device 12C further includes converging magnetic flux coil L3 and capacitor C3. Electric device 12C does not include capacitor C2 (see FIG. 1). Other configurations of electric device 12C are the same as those of electric device 12 illustrated in FIG. 1.

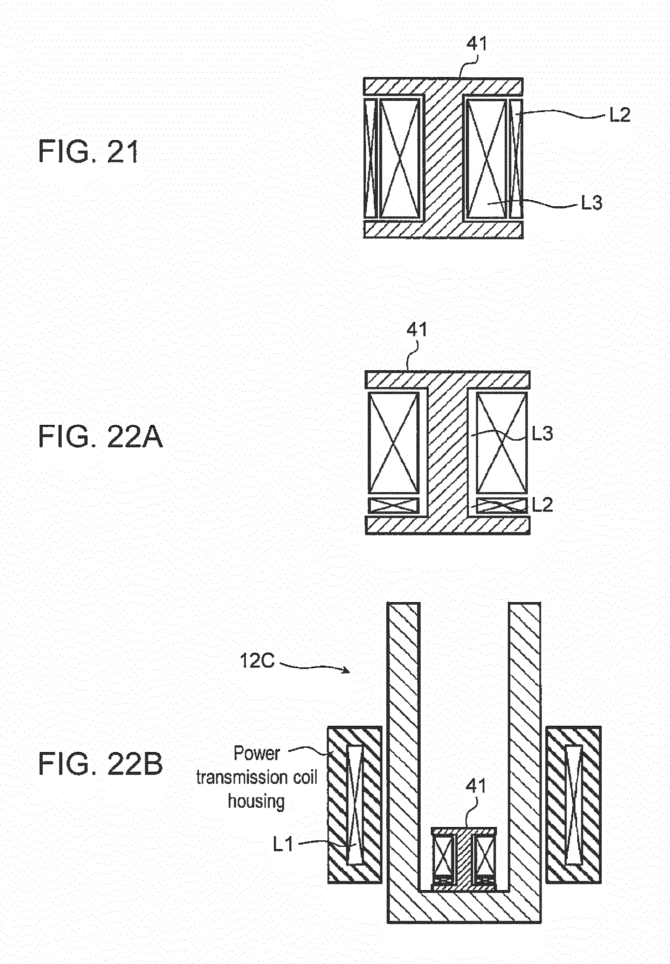

FIG. 21 is a sectional view of power reception coil L2 and converging magnetic flux coil L3 in FIG. 14. As illustrated in FIG. 21, converging magnetic flux coil L3 is wound around an inner periphery of magnetic substance (for example, ferrite) 41 around a center axis, and power reception coil L2 is wound around an outer periphery of converging magnetic flux coil L3. Power reception coil L2 is electrically insulated from converging magnetic flux coil L3 with an insulating tape or the like.

FIG. 22A is a sectional view of power reception coil L2 and converging magnetic flux coil L3 in a configuration different from that in FIG. 21. FIG. 22B is a sectional view schematically illustrating a state where electric device 12C having power reception coil L2 and converging magnetic flux coil L3 of a configuration in FIG. 22A is inserted in charger 11. Instead of the configuration illustrated in FIG. 21, configurations illustrated in FIGS. 22A and 22B may be employed.

Referring back to FIG. 14, converging magnetic flux coil L3 collects magnetic fluxes of the alternating field generated in power transmission coil L1. Capacitor C3 is connected to converging magnetic flux coil L3. Power reception coil L2 is magnetically coupled to converging magnetic flux coil L3. Converging magnetic flux coil L3 and capacitor C3 constitute power reception resonance circuit LC3. Converging magnetic flux coil L3 receives magnetic fluxes generated in power transmission coil L1, and delivers the magnetic fluxes to power reception coil L2.

As illustrated in FIG. 14, power reception resonance circuit LC3 is not electrically connected to power reception coil L2 or the like. In non-contact power transmission system 10A of the magnetic resonance system illustrated in FIG. 14, a transmission distance of power from power transmission coil L1 can be extended by power reception resonance circuit LC3 constituted by converging magnetic flux coil L3 and capacitor C3.

Non-contact power transmission system 10A of a magnetic resonance system illustrated in FIG. 14 also operates in a similar manner to that of non-contact power transmission system 10 of the electromagnetic induction system illustrated in FIG. 1, and can obtain a similar effect.

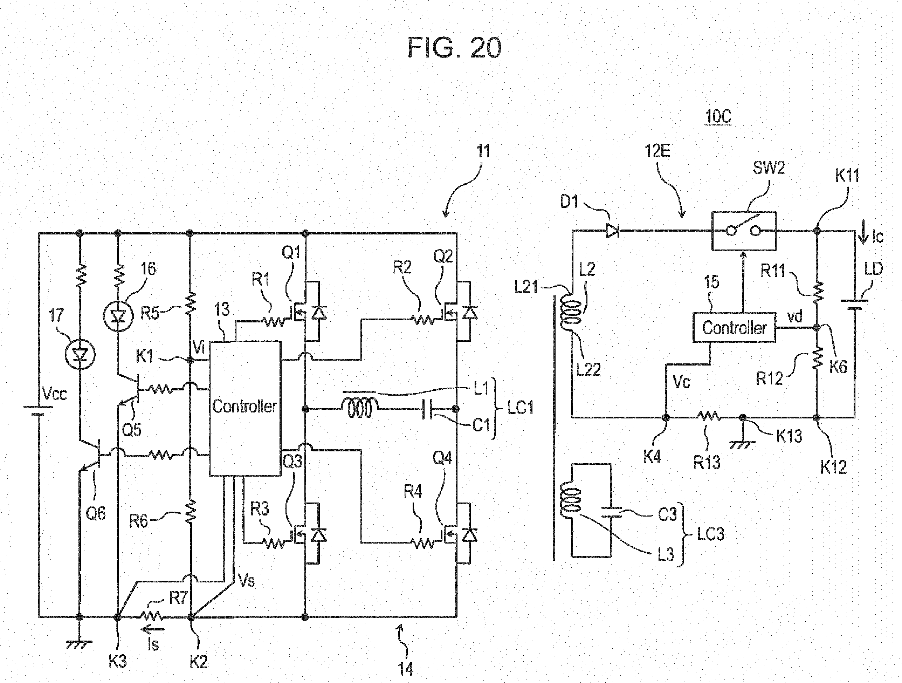

FIG. 20 schematically illustrates a circuit of non-contact power transmission system 10C of a magnetic resonance system according to the second exemplary embodiment. Non-contact power transmission system 10C of the magnetic resonance system includes charger 11 (an example of the power transmission device) and electric device 12E (an example of the power reception device), as illustrated in FIG. 20. Electric device 12E further includes converging magnetic flux coil L3 and capacitor C3.

Electric device 12E does not include capacitor C2 (see FIG. 15). Other configurations of electric device 12E are the same as those of electric device 12D illustrated in FIG. 15.

Non-contact power transmission system 10C of a magnetic resonance system illustrated in FIG. 20 also operates in a similar manner to that of non-contact power transmission system 10B of the electromagnetic induction system illustrated in FIG. 15, and can obtain a similar effect.
(2) In the first exemplary embodiment, the non-contact power transmission system is configured to be able to determine a power supply request from electric device 12 when two electric devices 12 are placed on charger 11. In the second exemplary embodiment, the non-contact power transmission system is configured to be able to determine a power supply request from electric device 12D when one electric device 12D is placed on charger 11.

Alternatively, the non-contact power transmission system may be configured to be able to determine a power supply request from electric device 12 when N (N is a predetermined natural number equal to or above 1) electric devices 12 are placed on charger 11.

In this case, controller 15 causes switching elements SW1, SW3 to keep power reception coil L2 in the conductive state, during one oscillation period of power transmission coil L1.

Controller 15 causes switching elements SW1, SW3 to repeat at least one switching operation of keeping power reception coil L2 in the non-conductive state during the subsequent N oscillation periods of power transmission coil L1.

In the first exemplary embodiment, controller 15 makes power reception coil L2 in the conductive state by turning off switching element SW1, and makes power reception coil L2 in the non-conductive state by turning on switching element SW1.

In the second exemplary embodiment, controller 15 makes power reception coil L2 in the conductive state by turning on switching element SW3, and makes power reception coil L2 in the non-conductive state by turning off switching element SW3.

As described with reference to FIG. 11, when the on/off states of switching elements SW1, SW3 are expressed by flags, 1, 0" may be repeated when N is 1, for example, ", and "1, 0, 0, 0" may be repeated when N is 3, for example.

Controller 13 determines whether input current Is of power transmission coil L1 is less than threshold value Ith. When controller 13 determines that input current Is is equal to or above threshold value Ith during one oscillation period of power transmission coil L1 and determines that input current Is is less than threshold value Ith during at least one of the subsequent N oscillation periods of power transmission coil L1, controller 13 switches power transmission coil L1 from the intermittent oscillation to the continuous oscillation.

As described above, controller 15 causes switching elements SW1, SW3 to keep power reception coil L2 in the conductive state, during one oscillation period of power transmission coil L1.

Controller 15 causes switching elements SW1, SW3 to keep power reception coil L2 in the non-conductive state, during the subsequent N oscillation periods of power transmission coil L1.

Therefore, in N electric devices 12, even when the switching of switching elements SW1, SW3 is deviated in any manner, power reception coil L2 becomes in the non-conductive state by switching elements SW1, SW3 of all N electric devices 12, during at least one of the subsequent N oscillation periods of power transmission coil L1.

In all N electric devices 12, when power reception coil L2 become in the non-conductive state, input current Is of power transmission coil L1 becomes less than threshold value Ith. When input current Is becomes less than threshold value Ith, controller 13 determines that there is a power supply request, and switches the power transmission coil from the intermittent oscillation to the continuous oscillation.

In this way, by the control of controller 13 and controller 15, controller 13 and controller 15 can determine a power supply request from electric device 12 when N (N is a predetermined natural number equal to or above 1) electric devices 12 are placed on charger 11.

In this case, controller 13 determines whether to switch power transmission coil L1 from the intermittent oscillation to the continuous oscillation, by when a total time of N times of cycle Ti (N × Ti) of the intermittent oscillation and the oscillation period (Ton) of the intermittent oscillation passes, after determining that input current Is is equal to or above threshold value Ith during one oscillation period of power transmission coil L1.
(3) As illustrated in FIG. 1, switching element SW1 is connected between connection point K4 connected to other end L22 of power reception coil L2 and connection point K5 connected to the cathode of diode D1, Alternatively, switching element SW1 may be connected between the anode of diode D1 and other end L22 of power reception coil L2.
(4) In each of the above exemplary embodiments, a full-bridge circuit including four switching elements Q1 to Q4 constitutes the drive circuit of power transmission resonance circuit LC1 of charger 11. Alternatively, a half-bridge circuit including two switching elements may constitute the drive circuit.
(5) In each of the above exemplary embodiments, an electric toothbrush is exemplified as electric device 12. However, electric device 12 is not limited to the electric toothbrush. However, for electric device 12, small electric appliances that are generally called beauty home electric appliances such as an electric shaver and an electric epilator mainly used around a washroom, for example, may be applied.

### INDUSTRIAL APPLICABILITY

The present disclosure is useful for realizing, in a simple configuration, a non-contact power transmission system in which a power transmission device can correctly determine a power supply request from a power reception device.

### REFERENCE MARKS IN THE DRAWINGS

- 10, 10A, 10B, 10C:: non-contact power transmission system
- 11:: charger
- 12, 12A to 12E:: electric device
- 13, 15:: controller
- 14:: oscillation circuit
- L1:: power transmission coil
- L2:: power reception coil
- R1 to R7, R11 to R13:: resistor
- Q1 to Q4, SW1 to SW3:: switching element

## Claims

1. A non-contact power transmission system comprising:
a power transmission device (11); and
a power reception device (12),
the non-contact power transmission system performing power transmission in a non-contact manner,
wherein the power transmission device includes:
a power transmission coil (L1);
an oscillator (LC1) that makes the power transmission coil oscillate;
an oscillation controller (13) that controls the oscillator so that the power transmission coil performs continuous oscillation, or intermittent oscillation in a predetermined cycle; and
a current detector (R7) that outputs a detection value according to an input current flowing in the power transmission coil,
wherein the power reception device includes:
a power reception coil (L2);
a switch unit (SW1, SW2) that sets the power reception coil in a conductive state or a non-conductive state; and
a switch controller (15) that causes the switch unit to switch between the conductive state and the non-conductive state synchronously with the predetermined cycle, in a case of the intermittent oscillation,
**characterized in that** the switch controller executes a switching operation of keeping the power reception coil in the conductive state during one oscillation period of the power transmission coil, and keeping the power reception coil in the non-conductive state during subsequent N (N is a predetermined natural number) oscillation periods of the power transmission coil, and
wherein the oscillation controller causes the oscillator to switch the power transmission coil from the intermittent oscillation to the continuous oscillation when the detection value is equal to or above a predetermined threshold value during the one oscillation period of the power transmission coil and also the detection value is less than the threshold value during at least one of the subsequent N oscillation periods of the power transmission coil.

2. The non-contact power transmission system according to claim 1, wherein
the switch unit includes a parallel switching element (SW1) connected in parallel to the power reception coil, and
the switch controller is configured to keep the parallel switching element in an off state during the one oscillation period of the power transmission coil and keep the parallel switching element in an on state during the subsequent N oscillation periods of the power transmission coil.

3. The non-contact power transmission system according to claim 1, wherein
the switch unit includes a series switching element (SW2) connected in series between the power reception coil and a load, and
the switch controller is configured to keep the series switching element in an on state during the one oscillation period of the power transmission coil and keep the series switching element in an off state during the subsequent N oscillation periods of the power transmission coil.

4. The non-contact power transmission system according to claim 1, wherein N is a predetermined natural number equal to or above 2,
the non-contact power transmission system further comprising (N-1) other power reception devices having a configuration identical to a configuration of the power reception device.

5. The non-contact power transmission system according to claim 1, wherein the oscillation controller determines whether the detection value during only an oscillation period of the intermittent oscillation is equal to or above or less than the threshold value.

6. The non-contact power transmission system according to claim 5, wherein the oscillation controller determines whether to switch the power transmission coil from the intermittent oscillation to the continuous oscillation, by when a total time of N times of the predetermined cycle of the intermittent oscillation and the oscillation period of the power transmission coil passes, after the detection value during the oscillation period of the power transmission coil becomes equal to or above the threshold value.

7. The non-contact power transmission system according to claim 1, wherein
when the power transmission becomes unnecessary in the continuous oscillation, the switch controller causes the switch unit to set the power transmission coil to the non-conductive state, and
after switching the power transmission coil to the continuous oscillation, when the detection value is less than the threshold value, the oscillation controller switches the power transmission coil to the intermittent oscillation.

8. The non-contact power transmission system according to claim 1, wherein
the oscillation controller causes the oscillator to switch the power transmission coil to the intermittent oscillation after a fixed time period after the power transmission coil is switched from the intermittent oscillation to the continuous oscillation,
the switch controller executes the switching operation, after switching the power transmission coil to the intermittent oscillation, and
the oscillation controller, after switching the power transmission coil to the intermittent oscillation, causes the oscillator to switch the power transmission coil to the continuous oscillation, when the detection value is equal to or above the predetermined threshold value during the one oscillation period of the power transmission coil and also the detection value is less than the threshold value during at least one of the subsequent N oscillation periods of the power transmission coil.

## Patentansprüche

1. Kontaktloses Stromübertragungssystem, das umfasst:
eine Strom-Sendevorrichtung (11); und
eine Strom-Empfangsvorrichtung (12),
wobei das kontaktlose Stromübertragungssystem Stromübertragung kontaktlos durchführt,
und die Strom-Sendevorrichtung enthält:
eine Strom-Sendespule (L1);
einen Oszillator (LC1), der die Strom-Sendespule oszillieren lässt;
eine Oszillations-Steuerungseinrichtung (13), die den Oszillator so steuert, dass die Strom-Sendespule kontinuierliche Oszillation oder intermittierende Oszillation in einem vorgegebenen Zyklus durchführt; sowie
einen Strom-Detektor (R7), der einen Erfassungs-Wert entsprechend einem Eingangs-Strom ausgibt, der in der Strom-Sendespule fließt,
wobei die Strom-Empfangsvorrichtung enthält:
eine Strom-Empfangsspule (L2);
eine Schalt-Einheit (SW1, SW2), die die Strom-Empfangsspule in einen leitenden Zustand oder einen nicht leitenden Zustand versetzt; sowie
eine Schalt-Steuerungseinrichtung (15), die die Schalt-Einheit veranlasst, bei der intermittierenden Oszillation synchron zu dem vorgegebenen Zyklus zwischen dem leitenden und dem nicht leitenden Zustand umzuschalten,
**dadurch gekennzeichnet, dass** die Schalt-Steuerungseinrichtung einen Schaltvorgang ausführt, durch den die Strom-Empfangsspule während einer Oszillations-Periode der Strom-Sendespule in dem leitenden Zustand gehalten wird und die Strom-Empfangsspule während N (N ist eine vorgegebene natürliche Zahl) aufeinanderfolgender Oszillations-Perioden der Strom-Sendespule in dem nicht leitenden Zustand gehalten wird, und
die Oszillations-Steuerungseinrichtung den Oszillator veranlasst, die Strom-Sendespule von der intermittierenden Oszillation zu der kontinuierlichen Oszillation umzuschalten, wenn der Erfassungs-Wert während der einen Oszillations-Periode der Strom-Sendespule auf oder über einem vorgegebenen Schwellenwert liegt, und des Weiteren der Erfassungs-Wert während wenigstens einer der N aufeinanderfolgenden Oszillations-Perioden der Strom-Sendespule unter dem Schwellenwert liegt.

2. Kontaktloses Stromübertragungssystem nach Anspruch 1, wobei
die Schalt-Einheit ein paralleles Schalt-Element (SW1) enthält, das parallel mit der Strom-Empfangsspule verbunden ist, und
die Schalt-Steuerungseinrichtung so konfiguriert ist, dass sie das parallele Schalt-Element während der einen Oszillations-Periode der Strom-Sendespule in einem AUS-Zustand hält und das parallele Schalt-Element während der N aufeinanderfolgenden Oszillations-Perioden der Strom-Sendespule in einem AN-Zustand hält.

3. Kontaktloses Stromübertragungssystem nach Anspruch 1, wobei
die Schalt-Einheit ein Reihen-Schalt-Element (SW2) enthält, das in Reihe zwischen die Strom-Empfangsspule und eine Last geschaltet ist, und
die Schalt-Steuerungseinrichtung so konfiguriert ist, dass sie das Reihen-Schalt-Element während der einen Oszillations-Periode der Strom-Sendespule in einem AN-Zustand hält und das Reihen-Schalt-Element während der N aufeinanderfolgenden Oszillations-Perioden der Strom-Sendespule in einem AUS-Zustand hält.

4. Kontaktloses Stromübertragungssystem nach Anspruch 1, wobei N eine vorgegebene natürliche Zahl ist, die gleich 2 oder größer ist,
das kontaktlose Stromübertragungssystem des Weiteren (N-1) weitere Strom-Empfangsvorrichtungen umfasst, die eine Konfiguration haben, die identisch zu einer Konfiguration der Strom-Empfangsvorrichtung ist.

5. Kontaktloses Stromübertragungssystem nach Anspruch 1, wobei die Oszillations-Steuerungseinrichtung feststellt, ob der Erfassungs-Wert während lediglich einer Oszillations-Periode der intermittierenden Oszillation auf oder über oder unter dem Schwellenwert liegt.

6. Kontaktloses Stromübertragungssystem nach Anspruch 5, wobei die Oszillations-Steuerungseinrichtung basierend darauf, ob eine Gesamtzeit des N-fachen des vorgegebenen Zyklus der intermittierenden Oszillation und der Oszillation-Periode der Strom-Sendespule verstreicht, nachdem der Erfassungs-Wert während der Oszillation-Periode der Strom-Sendespule dem Schwellenwert erreicht oder überschreitet, feststellt, ob die Strom-Sendespule von der intermittierenden Oszillation zu der kontinuierlichen Oszillation umschaltet.

7. Kontaktloses Stromübertragungssystem nach Anspruch 1, wobei
wenn die Stromübertragung bei der kontinuierlichen Oszillation unnötig wird, die Schalt-Steuerungseinrichtung die Schalt-Einheit veranlasst, die Strom-Sendespule in den nicht leitenden Zustand zu versetzen, und
die Oszillations-Steuerungseinrichtung nach Umschalten der Strom-Sendespule zu der kontinuierlichen Oszillation, wenn der Erfassungs-Wert unter dem Schwellenwert liegt, die Strom-Sendespule zu der intermittierenden Oszillation umschaltet.

8. Kontaktloses Stromübertragungssystem nach Anspruch 1, wobei
die Oszillations-Steuerungseinrichtung den Oszillator veranlasst, die Strom-Sendespule nach einem festgelegten Zeitraum nach Umschalten der Strom-Sendespule von der intermittierenden Oszillation zu der kontinuierlichen Oszillation zu der intermittierenden Oszillation umzuschalten,
die Schalt-Steuerungseinrichtung den Schaltvorgang nach Umschalten der Strom-Sendespule zu der intermittierenden Oszillation ausführt, und
die Oszillations-Steuerungseinrichtung nach Umschalten der Strom-Sendespule zu der intermittierenden Oszillation den Oszillator veranlasst, die Strom-Sendespule zu der kontinuierlichen Oszillation umzuschalten, wenn der Erfassungs-Wert während der einen Oszillations-Periode der Strom-Sendespule auf oder über dem vorgegebenen Schwellenwert liegt, und des Weiteren der Erfassungs-Wert während wenigstens einer der N aufeinanderfolgenden Oszillations-Perioden der Strom-Sendespule unter dem Schwellenwert liegt.

## Revendications

1. Système de transmission de puissance sans contact comprenant :
un dispositif de transmission de puissance (11) ; et
un dispositif de réception de puissance (12),
le système de transmission de puissance sans contact effectuant une transmission de puissance sans contact,
dans lequel le dispositif de transmission de puissance comprend :
une bobine de transmission de puissance (L1) ;
un oscillateur (LC1) qui fait osciller la bobine de transmission de puissance ;
un dispositif de commande d'oscillation (13) qui commande l'oscillateur de sorte que la bobine de transmission de puissance effectue une oscillation continue, ou une oscillation intermittente au cours d'un cycle prédéterminé ; et
un détecteur de courant (R7) qui délivre en sortie une valeur de détection en fonction d'un courant d'entrée circulant dans la bobine de transmission de puissance, dans lequel le dispositif de réception de puissance comprend :
une bobine de réception de puissance (L2) ;
une unité de commutation (SW1, SW2) qui place la bobine de réception de puissance dans un état conducteur ou dans un état non conducteur ; et
un dispositif de commande de commutation (15) qui amène l'unité de commutation à commuter entre l'état conducteur et l'état non conducteur de manière synchrone avec le cycle prédéterminé, dans le cas d'une oscillation intermittente, **caractérisé en ce que** le dispositif de commande de commutation exécute une opération de commutation pour maintenir la bobine de réception de puissance dans l'état conducteur pendant une première période d'oscillation de la bobine de transmission de puissance, et pour maintenir la bobine de réception de puissance dans l'état non conducteur pendant N (N est un nombre naturel prédéterminé) périodes d'oscillation suivantes de la bobine de transmission de puissance, et
dans lequel le dispositif de commande d'oscillation amène l'oscillateur à commuter la bobine de transmission de puissance de l'oscillation intermittente à l'oscillation continue lorsque la valeur de détection est égale ou supérieure à une valeur de seuil prédéterminée pendant la première période d'oscillation de la bobine de transmission de puissance et également lorsque la valeur de détection est inférieure à la valeur de seuil pendant au moins une des N périodes d'oscillation suivantes de la bobine de transmission de puissance.

2. Système de transmission de puissance sans contact selon la revendication 1, dans lequel
l'unité de commutation comprend un élément de commutation parallèle (SW1) connecté en parallèle à la bobine de réception de puissance, et
le dispositif de commande de commutation est configuré pour maintenir l'élément de commutation parallèle dans un état bloqué pendant la première période d'oscillation de la bobine de transmission de puissance et pour maintenir l'élément de commutation parallèle dans un état activé pendant les N périodes d'oscillation suivantes de la bobine de transmission de puissance.

3. Système de transmission de puissance sans contact selon la revendication 1, dans lequel
l'unité de commutation comprend un élément de commutation en série (SW2) connecté en série entre la bobine de réception de puissance et une charge, et
le dispositif de commande de commutation est configuré pour maintenir l'élément de commutation en série dans un état actif pendant la première période d'oscillation de la bobine de transmission de puissance et pour maintenir l'élément de commutation en série dans un état désactivé pendant les N périodes d'oscillation suivantes de la bobine de transmission de puissance.

4. Système de transmission de puissance sans contact selon la revendication 1, dans lequel N est un nombre naturel prédéterminé égal ou supérieur à 2,
le système de transmission de puissance sans contact comprenant en outre (N-1) autres dispositifs de réception de puissance ayant une configuration identique à une configuration du dispositif de réception de puissance.

5. Système de transmission de puissance sans contact selon la revendication 1, dans lequel le dispositif de commande d'oscillation détermine si la valeur de détection pendant seulement une période d'oscillation de l'oscillation intermittente est égale ou supérieure ou inférieure à la valeur de seuil.

6. Système de transmission de puissance sans contact selon la revendication 5, dans lequel le dispositif de commande d'oscillations détermine s'il est nécessaire de commuter la bobine de transmission de puissance de l'oscillation intermittente à l'oscillation continue, à partir d'un temps total de N fois le cycle prédéterminé de l'oscillation intermittente et la période d'oscillation de la bobine de transmission de puissance est écoulée, après que la valeur de détection pendant la période d'oscillation de la bobine de transmission de puissance devient égale ou supérieure à la valeur de seuil.

7. Système de transmission de puissance sans contact selon la revendication 1, dans lequel
lorsque la transmission de puissance devient inutile lors de l'oscillation continue, le dispositif de commande de commutation amène l'unité de commutation à établir la bobine de transmission de puissance dans l'état non conducteur, et
après avoir commuté la bobine de transmission de puissance en l'oscillation continue, lorsque la valeur de détection est inférieure à la valeur de seuil, le dispositif de commande d'oscillation commute la bobine de transmission de puissance en l'oscillation intermittente.

8. Système de transmission de puissance sans contact selon la revendication 1, dans lequel
le dispositif de commande d'oscillation amène l'oscillateur à commuter la bobine de transmission de puissance en l'oscillation intermittente après une période de temps fixe après avoir commuté la bobine de transmission de puissance de l'oscillation intermittente à l'oscillation continue,
le dispositif de commande de commutation exécute l'opération de commutation, après avoir commuté la bobine de transmission de puissance en l'oscillation intermittente, et
le dispositif de commande d'oscillation, après avoir commuté la bobine de transmission de puissance en l'oscillation intermittente, amène l'oscillateur à commuter la bobine de transmission de puissance en l'oscillation continue, lorsque la valeur de détection est égale ou supérieure à la valeur de seuil prédéterminée pendant la première période d'oscillation de la bobine de transmission de puissance et également lorsque la valeur de détection est inférieure à la valeur de seuil pendant au moins une des N périodes d'oscillation suivantes de la bobine de transmission de puissance.
